# EUROPEAN PATENT APPLICATION

(11) **EP 4 827 158 A1**
(43) Date of publication of application: **21.10.2026**
(21) Application number: 24902640.2
(22) Date of filing: 03.12.2024
(51) Int. Cl.: H04W 24/08, H04W 28/02, H04W 72/543

(54) **COMMUNICATION METHOD AND APPARATUS**

(30) Priority: 12.12.2023 CN 202311705654
(71) Applicant: Huawei Technologies Co., Ltd., Shenzhen, Guangdong 518129 (CN)
(72) Inventor: PAN, Qi, Shenzhen, Guangdong 518129 (CN); NI, Hui, Shenzhen, Guangdong 518129 (CN)
(74) Representative: Huawei European IPR
(86) International application number: PCT/CN2024/136390
(87) International publication number: WO 2025/124219

(57) **Abstract**

This application provides a communication method and apparatus, and relates to the field of communication technologies. The method includes: A first core network device receives a first data packet from an application server, where the first data packet includes first time information. The first core network device determines a first transmission delay based on the first time information, where the first transmission delay is a transmission delay between the first core network device and the application server. The first core network device sends the first transmission delay to a second core network device or a fourth core network device. The first core network device may be a user plane function network element, and the fourth core network device may be an application function network element.

## Description

This application claims priority to Chinese Patent Application No. 202311705654.X, filed with the China National Intellectual Property Administration on December 12, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a transmission delay between a user plane function (UPF) network element and an application server (application server, AS) affects service transmission performance. However, no technical solution for determining the transmission delay between the UPF network element and the application server is provided in a related technology. Consequently, end-to-end service transmission performance is affected, resulting in poor service experience.

### SUMMARY

To resolve the foregoing technical problem, this application provides a communication method and apparatus, to determine a transmission delay between a first core network device and an application server, thereby helping ensure end-to-end service transmission performance. To achieve the foregoing objective, the following technical solutions are used in this application.

According to a first aspect, a communication method is provided. The method may be performed by a first core network device. Unless otherwise specified, the "first core network device" in this application may be the first core network device, or may be a component (for example, a processor, a chip, or a chip system) in the first core network device, or may be a logical module or software that can implement all or some functions of the first core network device. The following uses an example in which an execution body is the first core network device for description. The method includes:

The first core network device receives a first data packet from an application server, where the first data packet includes first time information. The first core network device determines a first transmission delay based on the first time information, where the first transmission delay is a transmission delay between the first core network device and the application server. The first core network device sends the first transmission delay to a second core network device or a fourth core network device.

For example, the first core network device is a user plane function network element. The second core network device is a session management function network element. The fourth core network device is an application function network element.

In other words, after receiving the first data packet from the application server, the first core network device may determine the first transmission delay based on the first time information carried in the first data packet. In this way, the first core network device can obtain the transmission delay between the first core network device and the application server.

When the first core network device provides the first transmission delay for another core network device, for example, the second core network device, the other core network device may adjust a quality of service (QoS) parameter based on a transmission delay between a terminal device and the first core network device and the first transmission delay, for example, adjust a parameter such as a data packet delay budget (packet delay budget, PDB) or a data packet set delay budget (PDU set delay budget, PSDB), to implement end-to-end QoS control. In other words, based on the communication method in this application, in an end-to-end QoS guarantee process, the transmission delay between the first core network device and the application server may be referenced, to perform end-to-end service assurance and improve end-to-end service experience.

When the first core network device provides the first transmission delay for another core network device, for example, the fourth core network device, it may be understood that a network status is exposed through the first core network device. In this way, the fourth core network device may perform application layer dynamic adjustment based on the transmission delay between the terminal device and the first core network device and the first transmission delay, to perform end-to-end service assurance and improve end-to-end service experience.

In a possible design, the first transmission delay is used to adjust a quality of service (QoS) parameter, and the to-be-adjusted QoS parameter includes at least one of the following: a data packet delay budget between the terminal device and the first core network device; or a data packet set delay budget between the terminal device and the first core network device.

In a possible design, the first transmission delay is used for edge application server selection, re-discovery, or the like. For example, an edge application server with a lower first transmission delay may be selected, or when the first transmission delay is excessively high, edge application server replacement or re-discovery is triggered.

In a possible design, the first time information includes a moment at which the application server sends the first data packet. That the first core network device determines the first transmission delay based on the first time information includes: The first core network device determines the first transmission delay based on the following two moments: the moment at which the application server sends the first data packet; and a moment at which the first core network device receives the first data packet.

In other words, the first transmission delay may be a downlink transmission delay from the application server to the first core network device. The first transmission delay is determined based on a sending moment and a receiving moment of the first data packet, so that the first core network device learns of the 'downlink transmission delay from the application server to the first core network device'.

In a possible design, before the first core network device receives the first data packet from the application server, the method further includes: The first core network device sends a second data packet to the application server, where the second data packet includes a moment at which the first core network device sends the second data packet.

The first time information includes the moment at which the first core network device sends the second data packet and a moment at which the application server receives the second data packet.

That the first core network device determines the first transmission delay based on the first time information includes: The first core network device determines the first transmission delay based on the following two moments: the moment at which the first core network device sends the second data packet; and the moment at which the application server receives the second data packet.

In other words, the first transmission delay may be an uplink transmission delay from the first core network device to the application server. The first transmission delay is determined based on a sending moment and a receiving moment of the second data packet, so that the first core network device learns of the 'uplink transmission delay from the first core network device to the application server'.

In a possible design, before the first core network device receives the first data packet from the application server, the method further includes: The first core network device sends a second data packet to the application server, where the second data packet includes a moment at which the first core network device sends the second data packet.

The first time information includes the moment at which the first core network device sends the second data packet, a moment at which the application server receives the second data packet, and a moment at which the application server sends the first data packet.

That the first core network device determines the first transmission delay based on the first time information includes: The first core network device determines the first transmission delay based on the following four moments: the moment at which the first core network device sends the second data packet; the moment at which the application server receives the second data packet; the moment at which the application server sends the first data packet; and a moment at which the first core network device receives the first data packet.

In other words, the first transmission delay may be a transmission delay between the first core network device and the application server. The first transmission delay is determined based on a sending moment and a receiving moment of the first data packet and a sending moment and a receiving moment of the second data packet, so that the first core network device learns of the 'transmission delay between the first core network device and the application server'.

In a possible design, before the first core network device receives the first data packet from the application server, the method further includes: The first core network device receives a third data packet from the terminal device, where the third data packet includes a moment at which the terminal device sends the third data packet. The first core network device sends the third data packet to the application server.

The first time information includes the moment at which the terminal device sends the third data packet and a moment at which the application server receives the third data packet.

That the first core network device determines the first transmission delay based on the first time information includes: When the first data packet and the third data packet include a same moment, and the same moment is the moment at which the terminal device sends the third data packet, the first core network device determines the first transmission delay based on the following two moments: a moment at which the first core network device sends the third data packet; and the moment at which the application server receives the third data packet.

In other words, the first transmission delay may be an uplink transmission delay from the first core network device to the application server. The first transmission delay is determined based on a sending moment and a receiving moment of the third data packet, so that the first core network device learns of the 'uplink transmission delay from the first core network device to the application server'.

In a possible design, the first time information is carried in a real-time transport protocol (RTP) header or an RTP extension header of the first data packet. Alternatively, the first time information is carried in a real-time transport control protocol (RTCP) sender report (SR) field of the first data packet.

In a possible design, the first time information is carried in a first protocol layer of the first data packet. The first protocol layer is a protocol layer for a tunnel between the first core network device and the application server.

In a possible design, the method further includes: The first core network device receives first configuration information from the second core network device, where the first configuration information indicates to determine the first transmission delay, so that the first core network device measures the first transmission delay, to determine the first transmission delay.

In a possible design, the first configuration information further indicates at least one of the following: a measurement mode of the first transmission delay, a measurement period of the first transmission delay, a measurement trigger condition of the first transmission delay, a sending period of the first transmission delay, or a sending trigger condition of the first transmission delay.

The measurement mode of the first transmission delay may be understood as: determining the first transmission delay based on the first time information carried in the RTP header of the first data packet; or determining the first transmission delay based on the first time information carried in the RTP extension header of the first data packet; or determining the first transmission delay based on the first time information carried in the RTCP SR field of the first data packet.

In a possible design, the first configuration information further indicates an endpoint of a first tunnel and/or an establishment trigger condition of the first tunnel. The first tunnel is a tunnel between the first core network device and the application server.

The method further includes: The first core network device establishes the first tunnel based on the first configuration information, where the first tunnel is used to measure the first transmission delay, so that the first core network device measures the transmission delay through the first tunnel.

According to a second aspect, a communication method is provided. The method may be performed by a first core network device. Unless otherwise specified, the "first core network device" in this application may be the first core network device, or may be a component (for example, a processor, a chip, or a chip system) in the first core network device, or may be a logical module or software that can implement all or some functions of the first core network device. The following uses an example in which an execution body is the first core network device for description. The method includes:

The first core network device receives a first data packet from an application server, where the first data packet includes second time information. The first core network device determines a second transmission delay based on the second time information, where the second transmission delay is a transmission delay between a terminal device and the application server. The first core network device sends the second transmission delay to a second core network device, where the second transmission delay is used to determine a transmission delay between the first core network device and the application server.

For example, the first core network device is a user plane function network element. The second core network device is a session management function network element.

In other words, after receiving the first data packet from the application server, the first core network device may determine the second transmission delay based on the second time information carried in the first data packet. In this way, the first core network device can obtain the transmission delay between the terminal device and the application server.

When the first core network device provides the second transmission delay for another core network device, for example, the second core network device, the other core network device may determine the transmission delay between the first core network device and the application server based on the second transmission delay, and then adjust a quality of service (QoS) parameter based on the transmission delay between the first core network device and the application server and a transmission delay between the terminal device and the first core network device, for example, adjust a parameter such as a data packet delay budget (packet delay budget, PDB) or a data packet set delay budget (PDU set delay budget, PSDB). In other words, based on the communication method in this application, in an end-to-end QoS guarantee process, the transmission delay between the first core network device and the application server may be referenced, to perform end-to-end service assurance and improve end-to-end service experience.

In a possible design, the transmission delay between the first core network device and the application server is used to adjust a quality of service (QoS) parameter, and the to-be-adjusted QoS parameter includes at least one of the following: a data packet delay budget between the terminal device and the first core network device; or a data packet set delay budget between the terminal device and the first core network device.

In a possible design, the first transmission delay is used for edge application server selection, re-discovery, or the like. For example, an edge application server with a lower first transmission delay may be selected, or when the first transmission delay is excessively high, edge application server replacement or re-discovery is triggered.

In a possible design, before the first core network device receives the first data packet from the application server, the method further includes: The first core network device receives a fourth data packet from the terminal device, where the fourth data packet includes a moment at which the terminal device sends the fourth data packet. The first core network device sends the fourth data packet to the application server.

The second time information includes the moment at which the terminal device sends the fourth data packet and a moment at which the application server receives the fourth data packet.

That the first core network device determines the second transmission delay based on the second time information includes: The first core network device determines the second transmission delay based on the following two moments: the moment at which the terminal device sends the fourth data packet; and the moment at which the application server receives the fourth data packet.

In other words, the second transmission delay is determined based on a sending moment and a receiving moment of the fourth data packet, to determine an uplink transmission delay from the terminal device to the application server.

In a possible design, the second time information is carried in a real-time transport protocol (RTP) extension header of the first data packet.

In a possible design, the method further includes: The first core network device receives second configuration information from the second core network device, where the second configuration information indicates to determine the second transmission delay, so that the first core network device measures the second transmission delay. In this way, the first core network device determines the second transmission delay.

In a possible design, the second configuration information further indicates at least one of the following: a measurement mode of the second transmission delay, a measurement period of the second transmission delay, a measurement trigger condition of the second transmission delay, a sending period of the second transmission delay, or a sending trigger condition of the second transmission delay.

The measurement mode of the second transmission delay may be understood as: determining the second transmission delay based on the second time information carried in the RTP extension header of the first data packet.

According to a third aspect, a communication method is provided. The method may be performed by a second core network device. Unless otherwise specified, the "second core network device" in this application may be the second core network device, or may be a component (for example, a processor, a chip, or a chip system) in the second core network device, or may be a logical module or software that can implement all or some functions of the second core network device. The following uses an example in which an execution body is the second core network device for description. The method includes:

The second core network device obtains a first transmission delay, where the first transmission delay is a transmission delay between a first core network device and an application server. The second core network device sends the first transmission delay to a third core network device.

For example, the first core network device is a user plane function network element. The second core network device is a session management function network element. The third core network device is a policy control function network element.

In other words, the second core network device can obtain the transmission delay between the first core network device and the application server.

When the second core network device provides the first transmission delay for another core network device, for example, the third core network device, the other core network device may adjust a quality of service (QoS) parameter based on a transmission delay between a terminal device and the first core network device and the first transmission delay, for example, adjust a parameter such as a data packet delay budget (packet delay budget, PDB) or a data packet set delay budget (PDU set delay budget, PSDB). In other words, based on the communication method in this application, in an end-to-end QoS guarantee process, the transmission delay between the first core network device and the application server may be referenced, to perform end-to-end service assurance and improve end-to-end service experience.

In a possible design, the method further includes: The second core network device triggers edge application server selection, re-discovery, or the like based on the first transmission delay. For example, an edge application server with a lower first transmission delay may be selected, or when the first transmission delay is excessively high, edge application server replacement or re-discovery is triggered.

In a possible design, that the second core network device obtains the first transmission delay includes: The second core network device receives the first transmission delay from the first core network device. In other words, the second core network device obtains the first transmission delay from the first core network device.

In a possible design, that the second core network device obtains the first transmission delay includes: The second core network device receives the first transmission delay from a fourth core network device. In other words, the second core network device obtains the first transmission delay from the fourth core network device. The fourth core network device is an application function network element or a network data analytics function network element.

In a possible design, that the second core network device obtains the first transmission delay includes: The second core network device receives a second transmission delay from the first core network device or a fourth core network device, where the second transmission delay is a transmission delay between the terminal device and the application server. The second core network device determines the first transmission delay based on the second transmission delay. For example, the second core network device determines the first transmission delay based on the second transmission delay and a third transmission delay, and the third transmission delay is a transmission delay between the terminal device and the first core network device. The fourth core network device is an application function network element or a network data analytics function network element.

In other words, the second core network device obtains the second transmission delay from the first core network device, and then determines the first transmission delay with reference to the second transmission delay.

In a possible design, the method further includes: The second core network device obtains an adjusted QoS parameter, where the adjusted QoS parameter is determined based on the first transmission delay.

For example, the adjusted QoS parameter includes a parameter such as a PDB or a PSDB, to implement dynamic QoS control.

According to a fourth aspect, a communication method is provided. The method may be performed by a third core network device. Unless otherwise specified, the "third core network device" in this application may be the third core network device, or may be a component (for example, a processor, a chip, or a chip system) in the third core network device, or may be a logical module or software that can implement all or some functions of the third core network device. The following uses an example in which an execution body is the third core network device for description. The method includes:

The third core network device obtains a first transmission delay, where the first transmission delay is a transmission delay between a first core network device and an application server.

The third core network device adjusts a quality of service (QoS) parameter based on the first transmission delay, and/or the third core network device sends the first transmission delay to a fourth core network device. The QoS parameter includes at least one of the following: a data packet delay budget between a terminal device and the first core network device; or a data packet set delay budget between a terminal device and the first core network device.

For example, the first core network device is a user plane function network element. The third core network device is a policy control function network element. The fourth core network device is an application function network element.

In other words, the third core network device can obtain the transmission delay between the first core network device and the application server.

The third core network device adjusts the quality of service (QoS) parameter based on a transmission delay between the terminal device and the first core network device and the first transmission delay, for example, adjust a parameter such as a data packet delay budget (packet delay budget, PDB) or a data packet set delay budget (PDU set delay budget, PSDB), to implement end-to-end QoS control. In other words, based on the communication method in this application, in an end-to-end QoS guarantee process, the transmission delay between the first core network device and the application server may be referenced, to perform end-to-end service assurance and improve end-to-end service experience.

When the third core network device provides the first transmission delay for the fourth core network device, the third core network device may implement exposure of network status. In this way, the fourth core network device may perform application layer dynamic adjustment with reference to the first transmission delay, to perform end-to-end service assurance and improve end-to-end service experience.

In a possible design, that the third core network device obtains the first transmission delay includes: The third core network device receives the first transmission delay from a second core network device.

For example, the second core network device is a session management function network element.

In other words, the third core network device obtains the first transmission delay from the second core network device.

In a possible design, the method further includes: The third core network device receives first indication information from the fourth core network device, where the first indication information indicates to determine the first transmission delay. The third core network device determines first policy information based on the first indication information, where the first policy information indicates to determine the first transmission delay. The third core network device sends the first policy information to the second core network device.

In other words, the third core network device generates the first policy information based on the first indication information, to indicate, by using the first policy information, to determine the first transmission delay.

In a possible design, the first policy information further indicates at least one of the following: a measurement mode of the first transmission delay, a measurement period of the first transmission delay, a measurement trigger condition of the first transmission delay, a sending period of the first transmission delay, or a sending trigger condition of the first transmission delay. The first transmission delay is measured by the first core network device.

In a possible design, the first policy information further indicates an endpoint of a first tunnel and/or an establishment trigger condition of the first tunnel. The first tunnel is a tunnel between the first core network device and the application server, and the first tunnel is used to measure the first transmission delay.

In a possible design, that the third core network device obtains the first transmission delay includes: The third core network device receives a second transmission delay from the second core network device, where the second transmission delay is a transmission delay between the terminal device and the application server. The third core network device determines the first transmission delay based on the second transmission delay and a third transmission delay, and the third transmission delay is a transmission delay between the terminal device and the first core network device.

In other words, the first transmission delay is a transmission delay between the first core network device and the application server. The first transmission delay is determined based on the second transmission delay and the third transmission delay, so that the third core network device learns of the 'transmission delay between the first core network device and the application server'.

In a possible design, the method further includes: The third core network device receives first indication information from the fourth core network device, where the first indication information indicates to determine the first transmission delay. The third core network device determines second policy information based on the first indication information, where the second policy information indicates to determine the third transmission delay. The third core network device sends the second policy information to the second core network device.

In other words, the third core network device generates the second policy information based on the first indication information, to indicate, by using the second policy information, to determine the third transmission delay.

In a possible design, the second policy information further indicates to determine the second transmission delay.

For example, the fourth core network device may provide the second transmission delay in the first indication information. On the contrary, if the fourth core network device does not provide the second transmission delay, the second policy information further indicates to determine the second transmission delay.

In a possible design, the second policy information further indicates at least one of the following: a measurement mode of the second transmission delay, a measurement period of the second transmission delay, a measurement trigger condition of the second transmission delay, a sending period of the second transmission delay, or a sending trigger condition of the second transmission delay. The second transmission delay is determined by the first core network device.

In a possible design, the first indication information further indicates that the first transmission delay is used to adjust the QoS parameter. That the third core network device adjusts the QoS parameter based on the first transmission delay includes: The third core network device adjusts the QoS parameter based on the first transmission delay in response to the first indication information.

In other words, the third core network device adjusts the QoS parameter based on the first transmission delay only when the first indication information indicates that the first transmission delay is used to adjust the QoS parameter, thereby simplifying processing complexity on the third core network device side.

In a possible design, the first indication information further indicates to feed back the first transmission delay. That the third core network device sends the first transmission delay to the fourth core network device includes: The third core network device sends the first transmission delay to the fourth core network device in response to the first indication information.

In other words, the third core network device sends the first transmission delay to the fourth core network device only when the first indication information indicates to feed back the first transmission delay, to implement exposure of network status.

According to a fifth aspect, a communication method is provided. The method may be performed by a fourth core network device. Unless otherwise specified, the "fourth core network device" in this application may be the fourth core network device, or may be a component (for example, a processor, a chip, or a chip system) in the fourth core network device, or may be a logical module or software that can implement all or some functions of the fourth core network device. The following uses an example in which an execution body is the fourth core network device for description. The method includes:

The fourth core network device determines first indication information, where the first indication information indicates to determine a first transmission delay, and the first transmission delay is a transmission delay between a first core network device and an application server. The fourth core network device sends the first indication information to a third core network device.

For example, the first core network device is a user plane function network element. The third core network device is a policy control function network element. The fourth core network device is an application function network element.

In other words, the fourth core network device may generate the first indication information, to indicate, by using the first indication information, to determine the first transmission delay. When obtaining the first indication information, another core network device, for example, the third core network device, may generate different policies based on the first indication information, to determine the first transmission delay. In this way, in an end-to-end QoS guarantee process, the transmission delay between the first core network device and the application server may be referenced, to perform end-to-end service assurance and improve end-to-end service experience.

In a possible design, the first transmission delay is used to adjust a quality of service (QoS) parameter, and the to-be-adjusted QoS parameter includes at least one of the following: a data packet delay budget between a terminal device and the first core network device; or a data packet set delay budget between a terminal device and the first core network device.

In a possible design, the first indication information further indicates that the first transmission delay is used to adjust the QoS parameter, so that the third core network device adjusts the QoS parameter based on the first transmission delay, to perform end-to-end service assurance and improve end-to-end service experience.

In a possible design, the first indication information further indicates to feed back the first transmission delay. The method further includes: The fourth core network device receives the first transmission delay from the first core network device or the third core network device.

In other words, the fourth core network device may obtain the first transmission delay, to implement exposure of network status. In this way, the fourth core network device may perform application layer dynamic adjustment based on the first transmission delay, to perform end-to-end service assurance and improve end-to-end service experience.

In a possible design, the method further includes: The fourth core network device triggers edge application server selection, re-discovery, or the like based on the first transmission delay. For example, an edge application server with a lower first transmission delay may be selected, or when the first transmission delay is excessively high, edge application server replacement or re-discovery is triggered.

In a possible design, the first indication information further indicates at least one of the following: a measurement mode of the first transmission delay, a measurement period of the first transmission delay, a measurement trigger condition of the first transmission delay, a sending period of the first transmission delay, or a sending trigger condition of the first transmission delay.

In a possible design, the first indication information further indicates an endpoint of a first tunnel and/or an establishment trigger condition of the first tunnel. The first tunnel is a tunnel between the first core network device and the application server, and the first tunnel is used to measure the first transmission delay.

In other words, the fourth core network device may generate the first indication information, to indicate the endpoint or the establishment trigger condition of the first tunnel by using the first indication information. When obtaining the first indication information, another core network device, for example, the third core network device, may generate different policies based on the first indication information, to establish the first tunnel.

According to a sixth aspect, a communication method is provided. The method may be performed by an application server. Unless otherwise specified, the "application server" in this application may be the application server, or may be a component (for example, a processor, a chip, or a chip system) in the application server, or may be a logical module or software that can implement all or some functions of the application server. The following uses an example in which an execution body is the application server for description. The method includes:

The application server determines a first data packet, where the first data packet includes first time information, the first time information is used to determine a first transmission delay, and the first transmission delay is a transmission delay between a first core network device and the application server. The application server sends the first data packet to the first core network device.

For example, the first core network device is a user plane function network element.

In other words, after the application server sends the first data packet to the first core network device, the first core network device may determine the first transmission delay based on the first time information carried in the first data packet. In this way, the first core network device can obtain the transmission delay between the first core network device and the application server.

When the first core network device provides the first transmission delay for another core network device, the other core network device may adjust a quality of service (QoS) parameter based on a transmission delay between a terminal device and the first core network device and the first transmission delay, to implement end-to-end QoS control, thereby performing end-to-end service assurance and improving end-to-end service experience.

In a possible design, the first transmission delay is used to adjust a quality of service (QoS) parameter, and the to-be-adjusted QoS parameter includes at least one of the following: a data packet delay budget between a terminal device and the first core network device; or a data packet set delay budget between a terminal device and the first core network device.

In a possible design, the first time information includes a moment at which the application server sends the first data packet.

In this way, the first core network device may determine the first transmission delay based on two moments, that is, the moment at which the application server sends the first data packet and a moment at which the first core network device receives the first data packet.

In a possible design, before the application server determines the first data packet, the method further includes: The application server receives a second data packet from the first core network device, where the second data packet includes a moment at which the first core network device sends the second data packet.

The first time information includes the moment at which the first core network device sends the second data packet and a moment at which the application server receives the second data packet.

In this way, the first core network device may determine the first transmission delay based on two moments, that is, the moment at which the first core network device sends the second data packet and the moment at which the application server receives the second data packet.

In a possible design, before the application server determines the first data packet, the method further includes: The application server receives a second data packet from the first core network device, where the second data packet includes a moment at which the first core network device sends the second data packet.

The first time information includes the moment at which the first core network device sends the second data packet, a moment at which the application server receives the second data packet, and a moment at which the application server sends the first data packet.

In this way, the first core network device may determine the first transmission delay based on four moments, that is, the moment at which the first core network device sends the second data packet, the moment at which the application server receives the second data packet, the moment at which the application server sends the first data packet, and a moment at which the first core network device receives the first data packet.

In a possible design, before the application server determines the first data packet, the method further includes: The application server receives a third data packet from the terminal device through the first core network device, where the third data packet includes a moment at which the terminal device sends the third data packet.

The first time information includes a moment at which the application server receives the third data packet and the moment at which the terminal device sends the third data packet.

In this way, the first core network device may determine the first transmission delay based on two moments, that is, a moment at which the first core network device sends the third data packet and the moment at which the application server receives the third data packet.

In a possible design, the first time information is carried in a real-time transport protocol (RTP) header or an RTP extension header of the first data packet.

In a possible design, the first time information is carried in a real-time transport control protocol (RTCP) sender report (SR) field of the first data packet.

In a possible design, the first time information is carried in a first protocol layer of the first data packet. The first protocol layer is a protocol layer for a tunnel between the first core network device and the application server.

According to a seventh aspect, a communication method is provided. The method may be performed by an application server. Unless otherwise specified, the "application server" in this application may be the application server, or may be a component (for example, a processor, a chip, or a chip system) in the application server, or may be a logical module or software that can implement all or some functions of the application server. The following uses an example in which an execution body is the application server for description. The method includes:

The application server determines a first data packet, where the first data packet includes second time information, the second time information is used to determine a second transmission delay, the second transmission delay is a transmission delay between a terminal device and the application server, and the second transmission delay is used to determine a transmission delay between a first core network device and the application server. The application server sends the first data packet to the first core network device.

In other words, after the application server sends the first data packet to the first core network device, the first core network device may determine the second transmission delay based on the second time information carried in the first data packet. In this way, the first core network device can obtain the transmission delay between the terminal device and the application server.

When the first core network device provides the second transmission delay for another core network device, the other core network device may determine the transmission delay between the first core network device and the application server based on the second transmission delay, and then adjust a quality of service (QoS) parameter based on a transmission delay between the terminal device and the first core network device and the transmission delay between the first core network device and the application server, to implement end-to-end QoS control, thereby performing end-to-end service assurance and improving end-to-end service experience.

In a possible design, the transmission delay between the first core network device and the application server is used to adjust a quality of service (QoS) parameter, and the to-be-adjusted QoS parameter includes at least one of the following: a data packet delay budget between the terminal device and the first core network device; or a data packet set delay budget between the terminal device and the first core network device.

In a possible design, before the application server determines the first data packet, the method further includes: The application server receives a fourth data packet from the terminal device through the first core network device, where the fourth data packet includes a moment at which the terminal device sends the fourth data packet.

The second time information includes the moment at which the terminal device sends the fourth data packet and a moment at which the application server receives the fourth data packet.

In this way, the first core network device may determine the second transmission delay based on two moments, that is, the moment at which the terminal device sends the fourth data packet and the moment at which the application server receives the fourth data packet.

In a possible design, the second time information is carried in a real-time transport protocol (RTP) extension header of the first data packet.

According to an eighth aspect, a communication method is provided. The method may be performed by a fifth core network device. Unless otherwise specified, the "fifth core network device" in this application may be the fifth core network device, or may be a component (for example, a processor, a chip, or a chip system) in the fifth core network device, or may be a logical module or software that can implement all or some functions of the fifth core network device. The following uses an example in which an execution body is the fifth core network device for description. The method includes:

The fifth core network device receives a subscription request from a third core network device, where the subscription request is used to request an estimated value of a first transmission delay, and the estimated value of the first transmission delay indicates an estimated transmission delay between a first core network device and an application server. The fifth core network device obtains a historical measured value of the first transmission delay, where the historical measured value of the first transmission delay indicates a transmission delay between the first core network device and the application server in a historical time period. The fifth core network device determines the estimated value of the first transmission delay based on the historical measured value of the first transmission delay. The fifth core network device sends the estimated value of the first transmission delay to the third core network device.

The estimated value of the first transmission delay may be understood as an estimated value of the first transmission delay for a current moment or a future time period.

For example, the first core network device is a user plane function network element. The third core network device is a policy control function network element or a session management function network element. The fifth core network device is a network data analytics function network element.

In other words, the fifth core network device may perform data analysis based on the historical measured value of the first transmission delay in response to the subscription request, to obtain the estimated transmission delay between the first core network device and the application server, that is, the estimated value of the first transmission delay.

When the fifth core network device provides the estimated value of the first transmission delay for another core network device, for example, the third core network device, the third core network device adjusts a quality of service (QoS) parameter based on the estimated value of the first transmission delay, for example, adjusts a parameter such as a data packet delay budget (packet delay budget, PDB) or a data packet set delay budget (PDU set delay budget, PSDB), to implement end-to-end QoS control. In other words, based on the communication method in this application, in an end-to-end QoS guarantee process, the estimated value of the transmission delay between the first core network device and the application server may be referenced, to perform end-to-end service assurance and improve end-to-end service experience.

In a possible design, that the fifth core network device obtains the historical measured value of the first transmission delay includes: The fifth core network device obtains the historical measured value of the first transmission delay from a fourth core network device or the first core network device.

In other words, the fifth core network device may obtain the historical measured value of the first transmission delay from the fourth core network device or the first core network device, to provide a data analysis basis for the fifth core network device.

In a possible design, that the fifth core network device obtains the historical measured value of the first transmission delay includes: The fifth core network device obtains a historical measured value of a second transmission delay, where the historical measured value of the second transmission delay is a transmission delay between the terminal device and the application server that is measured in the historical time period. The fifth core network device obtains a historical measured value of a third transmission delay, where the historical measured value of the third transmission delay is a transmission delay between the terminal device and the first core network device that is measured in the historical time period. The fifth core network device determines the historical measured value of the first transmission delay based on the historical measured value of the second transmission delay and the historical measured value of the third transmission delay.

In other words, the first transmission delay is a transmission delay between the first core network device and the application server. The historical measured value of the first transmission delay is determined based on the historical measured value of the second transmission delay and the historical measured value of the third transmission delay, so that the fifth core network device learns of the 'transmission delay between the first core network device and the application server in the historical time period'.

In a possible design, that the fifth core network device obtains the historical measured value of the second transmission delay includes: The fifth core network device obtains the historical measured value of the second transmission delay from the fourth core network device, so that the fifth core network device side determines the historical measured value of the first transmission delay based on the historical measured value of the second transmission delay.

In a possible design, that the fifth core network device obtains the historical measured value of the third transmission delay includes: The fifth core network device obtains the historical measured value of the third transmission delay from the third core network device, so that the fifth core network device side determines the historical measured value of the first transmission delay based on the historical measured value of the third transmission delay.

In a possible design, the subscription request includes at least one of the following items.

A first item is an identifier of a first terminal device. The first terminal device performs data transmission with the application server through the first core network device. In other words, the subscription request is used to subscribe to the estimated value of the first transmission delay for the first terminal device.

A second item is an identifier of a first terminal device group. Each terminal device in the first terminal device group performs data transmission with the application server through the first core network device. In other words, the subscription request is used to subscribe to the estimated value of the first transmission delay for the first terminal device group.

A third item is an identifier of a first service. The first transmission delay is a transmission delay of the first service between the first core network device and the application server. In other words, the subscription request is used to subscribe to the estimated value of the first transmission delay for the first service.

According to a ninth aspect, a communication apparatus is provided, to implement the foregoing methods. The communication apparatus includes a corresponding module, unit, or means (means) for implementing the method. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any possible implementation of the foregoing aspects. The transceiver module may also be referred to as a transceiver unit, and is configured to implement a sending function and/or a receiving function in any one of the foregoing aspects and any possible implementation of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and any possible implementation of the foregoing aspects.

According to a tenth aspect, a communication apparatus is provided, including a processor and a memory. The processor is coupled to the memory. The memory stores program instructions. When the program instructions stored in the memory are executed by the processor, the communication apparatus is enabled to perform the method according to any one of the foregoing aspects or any possible design of any one of the foregoing aspects.

According to an eleventh aspect, a communication apparatus is provided, including a processor. The processor is configured to execute a computer program or instructions, to enable the communication apparatus to perform the method according to any aspect.

Optionally, the communication apparatus further includes a memory. The memory may be coupled to the processor. Alternatively, the memory may exist independently of the processor. For example, the memory and the processor are two independent modules. The memory may be outside the communication apparatus, or may be inside the communication apparatus.

According to a twelfth aspect, a computer-readable storage medium is provided. The computer-readable storage medium stores a computer program or instructions. When the computer program or the instructions are run on a communication apparatus, the communication apparatus is enabled to perform the method according to any aspect.

According to a thirteenth aspect, a computer program product including instructions is provided. When the computer program product runs on a communication apparatus, the communication apparatus is enabled to perform the method according to any aspect.

The communication apparatus provided in any one of the ninth aspect to the thirteenth aspect may be the first core network device in the first aspect or the second aspect, or a component such as a chip or a chip system in the first core network device; or the communication apparatus may be the second core network device in the third aspect, or a component such as a chip or a chip system in the second core network device; or the communication apparatus may be the third core network device in the fourth aspect, or a component such as a chip or a chip system in the third core network device; or the communication apparatus may be the fourth core network device in the fifth aspect, or a component such as a chip or a chip system in the fourth core network device; or the communication apparatus may be the application server in the sixth aspect or the seventh aspect, or a component such as a chip or a chip system in the application server; or the communication apparatus may be the fifth core network device in the eighth aspect, or a component such as a chip or a chip system in the fifth core network device. When being a chip system, the apparatus may include a chip, or may include a chip and another discrete component.

It may be understood that when the communication apparatus provided in any one of the ninth aspect to the thirteenth aspect is a chip, a sending action/function of the communication apparatus may be understood as outputting information, and a receiving action/function of the communication apparatus may be understood as inputting information.

For technical effects brought by any one of the designs of the ninth aspect to the thirteenth aspect, refer to the technical effects brought by different designs of the first aspect to the eighth aspect. Details are not described herein again.

### BRIEF DESCRIPTION OF DRAWINGS

FIG. 1 is a diagram of an architecture of a communication system to which an embodiment of this application is applied;
FIG. 2a is a diagram of an architecture of another communication system to which an embodiment of this application is applied;
FIG. 2b shows a user plane protocol according to an embodiment of this application;
FIG. 3 is a diagram of a principle of a QoS guarantee mechanism according to an embodiment of this application;
FIG. 4 is a diagram of a principle of another QoS guarantee mechanism according to an embodiment of this application;
FIG. 5 is a schematic flowchart of a communication method according to an embodiment of this application;
FIG. 6 is a diagram of a structure of a header of a data packet according to an embodiment of this application;
FIG. 7 is a diagram of a structure of a header of another data packet according to an embodiment of this application;
FIG. 8 is a diagram of a structure of a header of another data packet according to an embodiment of this application;
FIG. 9A and FIG. 9B are a schematic flowchart of another communication method according to an embodiment of this application;
FIG. 10A and FIG. 10B are a schematic flowchart of another communication method according to an embodiment of this application;
FIG. 11A and FIG. 11B are a schematic flowchart of another communication method according to an embodiment of this application;
FIG. 12 is a schematic flowchart of another communication method according to an embodiment of this application;
FIG. 13A and FIG. 13B are a schematic flowchart of another communication method according to an embodiment of this application;
FIG. 14 is a schematic flowchart of another communication method according to an embodiment of this application;
FIG. 15 is a diagram of a structure of a communication apparatus according to an embodiment of this application;
FIG. 16 is a diagram of a structure of another communication apparatus according to an embodiment of this application; and
FIG. 17 is a diagram of a structure of another communication apparatus according to an embodiment of this application.

### DESCRIPTION OF EMBODIMENTS

The following describes technical solutions of this application with reference to accompanying drawings.

The terms "system" and "network" may be interchangeable in this application. All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

In embodiments of this application, "of (of)", "corresponding, relevant (corresponding, relevant)", and "corresponding (corresponding)" may be interchangeably used sometimes. It should be noted that meanings expressed by the terms are consistent when differences between the terms are not emphasized.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

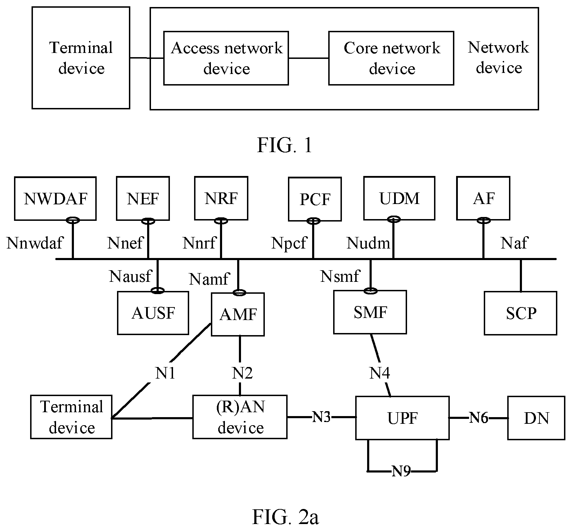

Embodiments of this application may be applied to a communication system shown in FIG. 1. The communication system may be a communication system that supports a 4th generation (fourth generation, 4G) access technology, for example, a long term evolution (LTE) access technology; or the communication system may be a communication system that supports a 5th generation (fifth generation, 5G) access technology, for example, a new radio (NR) access technology; or the communication system may be a communication system that supports a plurality of radio technologies, for example, a communication system that supports an LTE access technology and an NR access technology. In addition, the communication system may also be applicable to a future-oriented communication technology.

FIG. 1 is a diagram of an architecture of a communication system according to an embodiment of this application. As shown in FIG. 1, the communication system includes a terminal device and network devices. The network devices include an access network (AN) device and a core network (core network, CN) device. The access network device may be replaced with a radio access network (RAN) device.

The terminal device accesses a core network via the access network device or the radio access network device. The terminal device includes a device that provides a voice and/or data connectivity for a user. Specifically, the terminal device includes a device that provides the voice for the user, includes a device that provides the data connectivity for the user, or includes a device that provides the voice and the data connectivity for the user. For example, the terminal device may include a handheld device with a wireless connection function, or a processing device connected to a wireless modem. The terminal device may communicate with a core network through a radio access network, and exchange voice or data with the RAN, or exchange voice and data with the RAN. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, a portable, pocket-sized, handheld, or computer built-in mobile apparatus, or the like. For example, the terminal device may be a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

If various terminal devices described above are located on a vehicle (for example, placed in the vehicle or installed in the vehicle), the terminal devices may all be considered as vehicle-mounted terminal devices. For example, the vehicle-mounted terminal devices are also referred to as on-board units (on-board unit, OBU).

In embodiments of this application, the terminal device may alternatively include a relay (relay). Alternatively, it is understood that any device that can perform data communication with a base station may be considered as the terminal device.

In embodiments of this application, an apparatus configured to implement a function of a terminal device may be a terminal device, or may be an apparatus that can support a terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the apparatus configured to implement a function of a terminal device is a terminal device is used for description.

The access network device may be a device that connects the terminal device to a wireless network. The access network device in embodiments of this application may include base stations (base station) in various forms, for example, may be a macro base station, a micro base station (also referred to as a small cell), a relay station, an access point, a transmission point (TP), an evolved NodeB (evolved NodeB, eNodeB), a transmission/reception point (TRP), a next generation NodeB (next generation NodeB, gNB) in a 5G communication system, a device that implements a base station function in a communication system evolved after 5G, a mobile switching center, or a device that performs a base station function in D2D, V2X, or M2M communication; or may be an access network device in a non-terrestrial network (NTN) communication system, that is, may be deployed on a high-altitude platform or a satellite; or may be a module or a unit that completes some functions of a base station, for example, may be a central unit (central unit, CU) or a distributed unit (distributed unit, DU) in a cloud radio access network (cloud radio access network, C-RAN) system. Neither of a specific technology and a specific device form used for the access network device is limited in embodiments of this application. All or some functions of the access network device may be alternatively implemented by using a software function running on hardware, or may be implemented by using a virtualized function instantiated on a platform (for example, a cloud platform). In embodiments of this application, unless otherwise specified, the access network device is a RAN device.

Different core network devices of a core network are described as follows:
A user plane function network element is used for packet routing and forwarding, quality of service (QoS) handling for user plane data, and the like. As shown in FIG. 2a, in a 5G communication system, the user plane function network element may be a user plane function (UPF) network element. In a future communication system, the user plane function network element may still be a UPF network element, or may have another name. This is not limited in embodiments of this application.

A data network (data network, DN) network element is configured to provide a network for data transmission. As shown in FIG. 2a, in the 5G communication system, a data network may be a DN. In a future communication system, the data network may still be a DN, or may have another name. This is not limited in embodiments of this application.

An authentication server function network element is configured to perform an authentication service, generate a key to implement two-way authentication for a terminal device, and support a unified authentication framework. As shown in FIG. 2a, in the 5G communication system, the authentication server function network element may be an authentication server function (AUSF) network element. In a future communication system, the authentication server function network element may still be an AUSF network element, or may have another name. This is not limited in embodiments of this application.

An access and mobility management function network element is configured to perform mobility management, access management, and the like, and may be configured to implement functions, for example, lawful interception and access authorization/authentication, other than session management in functions of a mobility management network element (mobility management entity, MME). As shown in FIG. 2a, in the 5G communication system, the access and mobility management function network element may be an access and mobility management function (AMF) network element. In a future communication system, the access and mobility management function network element may still be an AMF network element, or may have another name. This is not limited in embodiments of this application.

A session management function network element is mainly used for session management, internet protocol (IP) address allocation and management of a terminal device, selection of an endpoint that can manage a user plane function interface and a policy control and charging function interface, downlink data notification, and the like. As shown in FIG. 2a, in the 5G communication system, the session management function network element may be a session management function (SMF) network element. In a future communication system, the session management function network element may still be an SMF network element, or may have another name. This is not limited in embodiments of this application.

A service communication proxy network element is configured to provide a communication proxy function between network function (NF) network elements. As shown in FIG. 2a, in the 5G communication system, the service communication proxy network element may be a service communication proxy (SCP) network element. In a future communication system, the service communication proxy network element may still be an SCP network element, or may have another name. This is not limited in embodiments of this application.

A network data analytics function network element is used for a network data analytics function, and provides network data collection and analysis services based on technologies such as big data and artificial intelligence. As shown in FIG. 2a, in the 5G communication system, the network data analytics function network element may be a network data analytics function (NWDAF) network element. In a future communication system, the network data analytics function network element may still be an NWDAF network element, or may have another name, for example, a network analytics network element or a network analytics function network element. This is not limited in embodiments of this application.

A network exposure function network element is configured to provide a network customization function, and/or is configured to securely expose, to the outside, a service, a capability, and the like that are provided by a 3rd generation partnership project (3GPP) network function. As shown in FIG. 2a, in the 5G communication system, the network exposure function network element may be a network exposure function (NEF) network element. In a future communication system, the network exposure function network element may still be an NEF network element, or may have another name. This is not limited in embodiments of this application.

A network repository function network element is configured to maintain real-time information of all network function services in a network. As shown in FIG. 2a, in the 5G communication system, the network repository function network element may be a network repository function (NRF) network element. In a future communication system, the network repository function network element may still be an NRF network element, or may have another name. This is not limited in embodiments of this application.

A policy control function network element is configured to guide a unified policy framework of network behavior, provide policy rule information for a control plane network element (for example, an AMF network element or an SMF network element), and the like. In a 4G communication system, the policy control function network element may be a policy and charging rules function (PCRF) network element. As shown in FIG. 2a, in the 5G communication system, the policy control function network element may be a policy control function (PCF) network element. In a future communication system, the policy control function network element may still be a PCF network element, or may have another name. This is not limited in embodiments of this application.

A unified data management network element is used for terminal device identifier processing, access authentication, registration, mobility management, and the like. As shown in FIG. 2a, in the 5G communication system, the unified data management network element may be a unified data management (UDM) network element. In a future communication system, the unified data management network element may still be a UDM network element, or may have another name. This is not limited in embodiments of this application.

An application function network element is configured to perform application influence on traffic routing, access a network exposure function network element, interact with a policy framework for policy control, and the like. As shown in FIG. 2a, in the 5G communication system, the application function network element may be an application function (AF) network element. In a future communication system, the application function network element may still be an AF network element, or may have another name. This is not limited in embodiments of this application.

Refer to FIG. 2a. A terminal device accesses a 5G network via a (R)AN device, and the terminal device communicates with an AMF network element through an N1 interface (N1 for short). The (R)AN device communicates with the AMF network element through an N2 interface (N2 for short). The (R)AN device communicates with a UPF network element through an N3 interface (N3 for short). An SMF network element communicates with the UPF network element through an N4 interface (N4 for short). The UPF network element accesses a DN through an N6 interface (N6 for short). Different UPF network elements communicate with each other through an N9 interface (N9 for short). In the architecture shown in FIG. 2a, N1, N2, N3, N4, N6, and N9 respectively represent reference points (reference point) between related network elements/network functions. The (R)AN device is an AN device or a RAN device.

In addition, control plane functions such as an AUSF network element, the AMF network element, the SMF network element, an NWDAF network element, an NEF network element, an NRF network element, a PCF network element, a UDM network element, or an AF network element shown in FIG. 2a interact with each other through a service-based interface. For example, a service-based interface provided by the AUSF network element externally is Nausf, a service-based interface provided by the AMF network element externally is Namf, a service-based interface provided by the SMF network element externally is Nsmf, a service-based interface provided by the NWDAF network element externally is Nnwdaf, a service-based interface provided by the NEF network element externally is Nnef, a service-based interface provided by the NRF network element externally is Nnrf, a service-based interface provided by the PCF network element externally is Npcf, a service-based interface provided by the UDM network element externally is Nudm, and a service-based interface provided by the AF network element externally is Naf. For related function descriptions and interface descriptions, refer to a diagram of a 5G system architecture (5G system architecture) in the 23501 standard. Details are not described herein.

Optionally, the foregoing core network devices may be implemented by one device, may be implemented by a plurality of devices together, or may be one functional module in one device. This is not specifically limited in embodiments of this application. It may be understood that the foregoing functional module may be a network element in a hardware device, may be a software functional module running on dedicated hardware, or may be a virtualized functional module instantiated on a platform (for example, a cloud platform).

Optionally, in embodiments of this application, the terms "network element", "entity", "device", and the like may be replaced with each other. For example, the "AMF network element" may be alternatively written as an "AMF entity" or an "AMF device", and the "SMF network element" may be alternatively written as an "SMF entity" or an "SMF device". In addition, in some embodiments, for ease of description, an "XXX network element" is written as "XXX" for short. For example, the "AUSF network element" may be alternatively written as "AUSF" for short, and the "SMF network element" may be alternatively written as "SMF" for short. In embodiments of this application, the XXX network element is used as an example for description. This applies throughout, and is not repeated below.

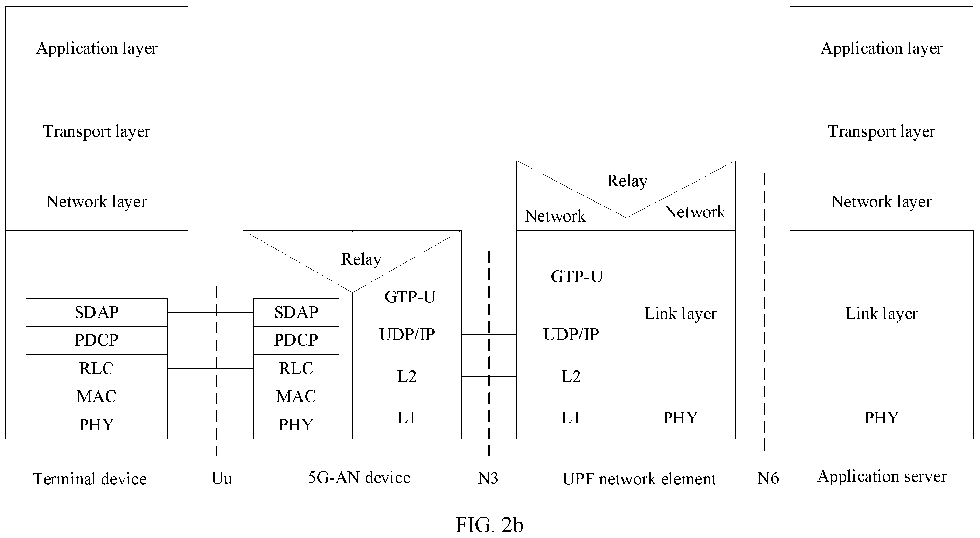

FIG. 2b shows a user plane protocol model from a terminal device to an application server.

The protocol model includes an application layer (application layer), a transport layer (transport layer), a network layer (network layer) or an IP layer, a link layer (link layer), and a physical (PHY) layer from top to bottom.

In FIG. 2b, a connection used to send and receive data is located at the transport layer, and the transport layer is an end-to-end protocol layer from the terminal device to the application server. A related protocol of the transport layer includes the QUIC protocol and the user datagram protocol (UDP), or a related protocol of the transport layer includes the UDP protocol, or a related protocol of the transport layer includes the transmission control protocol (TCP), or the like.

It is easy to understand that in some protocol classification models, the QUIC protocol is classified as an application layer protocol rather than a transport layer protocol.

Below the network layer, there are several segments of interconnected different 3GPP network protocol stacks from the terminal device to an access network device and from the access network device to a user plane function network element. Specifically, a 3GPP network protocol stack between the terminal device and the access device includes a service data adaptation protocol (SDAP) layer, a packet data convergence protocol (PDCP) layer, and lower protocol layers. The lower protocol layers include a radio link control (RLC) layer, a medium access control (MAC) layer, and a physical layer (physical layer). A 3GPP network protocol stack between the access network device and the user plane function network element includes a general packet radio service (GPRS) tunneling protocol for the user plane (GPRS tunneling protocol for the user plane, GTP-U) layer and lower protocol layers. The lower protocol layers include a user datagram protocol (UDP) layer/an internet protocol (IP) layer, a layer 2 (level 2, L2), and a layer 1 (level 1, L1). The access network device and the user plane function network element belong to a 3GPP network.

The GTP-U layer includes a GTP-U tunnel. The GTP-U tunnel is a connection tunnel between the access network device and the user plane function network element (for example, a 5G-AN device and a UPF network element in FIG. 2b), that is, data from/to a terminal device side is added to the GTP-U tunnel for sending. The GTP-U tunnel is at a PDU session granularity, that is, a GTP-U tunnel between the access network device and the user plane function network element is established for each PDU session.

For ease of understanding of embodiments of this application, terms in embodiments of this application are first briefly described below. It should be understood that these descriptions are merely for ease of understanding embodiments of this application, and should not constitute any limitation on this application.

### 1. service data flow (service data flow, SDF)

Generally, service flow description information may be an SDF template (SDF template), that is, service data flow detection is performed by using the SDF template, to determine which data belongs to a current SDF. Specifically, the service flow description information may include information such as an IP 5-tuple or 3-tuple of the service flow, for example, a source IP address, a source port number, a destination IP address, or a destination port number.

### 2. Quality of service flow (quality of service flow, QoS flow)

In a 5th generation access technology-based communication system (5G system, 5GS), when a terminal device has a service communication requirement, a protocol data unit (PDU) session is established, and a service flow is specifically carried in a QoS flow in the PDU session. For example, one PDU session may include one or more QoS flows, and each QoS flow is used to carry a service flow.

Specifically, the terminal device obtains an IP address through PDU session establishment, to interact with an external application server to implement service communication. The 5GS maps a corresponding service data flow to different QoS flows based on service flow description information, for example, an SDF template, to perform corresponding QoS handling.

### 3. GTP-U tunnel

In a PDU session establishment process, a connection tunnel between a RAN device and a UPF network element includes a GTP-U tunnel, that is, data from/to a terminal device side is added to the tunnel for sending. The GTP-U tunnel is at a PDU session granularity, that is, a GTP-U tunnel between the RAN device and the UPF network element is established for each PDU session.

### 4. QoS flow identifier (QFI)

The QFI is a unique identifier of a different QoS flow in a PDU session. One QFI is used to identify one QoS flow in a PDU session.

### 5. Bearer (Bearer)

The bearer refers to a radio connection resource that is established between a RAN device and a terminal device and that is used to represent different service quality. The bearer between the terminal device and the RAN device may include a plurality of QoS flows.

### 6. QoS monitoring (QoS monitoring)

To assist in an ultra-reliability low delay communication (ultra-reliability low delay communication, uRLLC) service, 3GPP defines a QoS monitoring feature to implement delay measurement at a data packet granularity. A data packet transmission delay between a terminal device and a PDU session anchor (PDU session anchor, PSA) UPF network element is used as a result of QoS monitoring. The transmission delay includes a delay between the terminal device and a RAN device on an air interface side and a transmission delay on an N3 link between the RAN device and the UPF network element. On a core network side, a transmission delay of an uplink data packet (or a downlink data packet) between the RAN device and the UPF network element may be measured based on different granularities. For example, a transmission delay is measured based on a single QoS flow granularity of a terminal device, or a transmission delay is measured based on a GTP-U tunnel granularity. A specific granularity to be used depends on an operator policy, a third-party application request, or a policy and charging control (policy and charging control, PCC) rule.

Specifically, using the QoS flow granularity as an example, an SMF network element activates uplink (or downlink) transmission delay measurement for a QoS flow in a PDU session establishment procedure or a PDU session modification procedure. The SMF network element sends a QoS monitoring request to the RAN device and the UPF network element. The QoS monitoring request includes a QoS monitoring parameter. A timestamp, a QoS monitoring indication, and the like are added to a GTP-U between the RAN device and the UPF network element, to measure a delay of a data packet on the N3 link between the RAN device and the UPF network element. The PSA UPF network element reports a measurement result to the SMF network element based on the QoS monitoring request sent by the SMF network element. For example, the PSA UPF network element reports the measurement result to the SMF network element only when a reporting threshold condition is met.

### 7. Network information exposure

Network information indicates a network status. For example, the network information includes a transmission delay, for example, a transmission delay between a terminal device and a UPF network element. Specifically, the transmission delay may be an uplink transmission delay, a downlink transmission delay, or an uplink and downlink loopback transmission delay. In addition, the network information may alternatively be congestion information on a network side, for example, a congestion status between a RAN device and a terminal device.

Network information exposure may be understood as providing network information for a third-party application.

In the research of the standard, that an application layer perceives a network status or exposes network information to an application side is an important problem to be studied urgently. For example, the application layer perceives the network status in real time and adjusts a parameter accordingly, thereby ensuring service experience of a user and maximizing network utilization. However, conventional delay (for example, a transmission delay between a terminal device and a UPF network element) measurement cannot meet a requirement of the application layer. How to expose more information is a key problem.

Correspondingly, the network information may be exposed to the third-party application via a control plane capability exposure interface. For example, the network information is directly exposed to the third-party application through an NEF network element via a UPF service-based interface, or the UPF network element sends the network information to an SMF network element, and the SMF network element exposes the network information to the third-party application through an NEF network element.

It should be noted that because the RAN device has a security risk, generally, the RAN device does not directly expose the network information. The RAN device needs to first notify a core network device, for example, the UPF network element, of the monitored network information, and the UPF network element exposes the network information.

Alternatively, the network information may be exposed to the third-party application in a user plane form. For example, the network information is added to a data packet and sent to a terminal device side or an application server side in a channel-associated manner.

However, in a related technology, network information measurement and exposure are merely for information in 3GPP, for example, a delay, a transmission rate, and a congestion status, and a QoS status of an N6 transmission path is not considered. An N6 interface is an interface through which a UPF network element accesses a DN. For details, refer to the descriptions in FIG. 2a. The N6 transmission path is a transmission path between the UPF network element and an application server. A delay of the N6 transmission path may be understood as a transmission delay between the UPF network element and the application server.

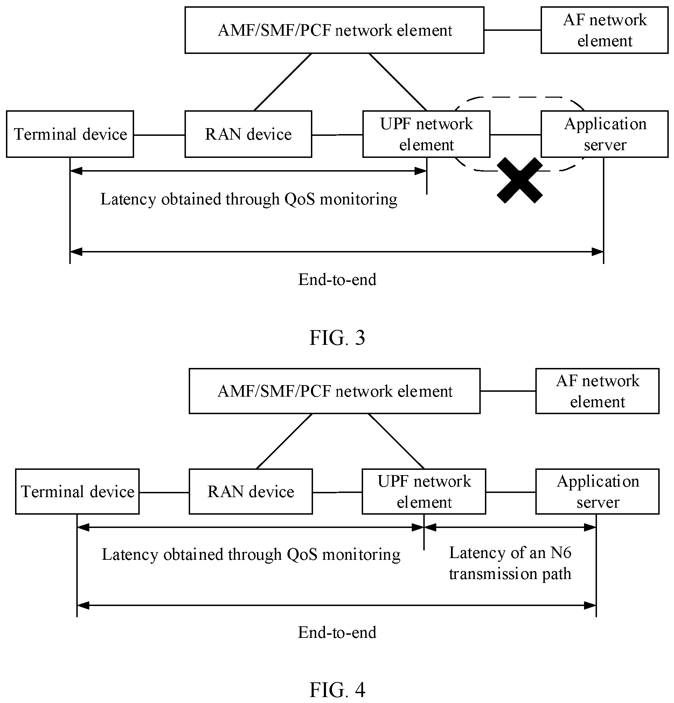

FIG. 3 is used as an example. For end-to-end QoS guarantee, in most cases, only a transmission delay between a terminal device and the UPF network element is considered, and the delay of the N6 transmission path is ignored, affecting end-to-end service experience.

In conclusion, how to determine a transmission delay between a UPF network element and an application server is an urgent technical problem to be resolved.

In view of this, this application provides the following communication method. The communication method provided in this application may be applied to the system shown in FIG. 1 or FIG. 2a.

The communication method in embodiments of this application includes: A first core network device receives a first data packet from an application server, where the first data packet includes first time information. The first core network device determines a first transmission delay based on the first time information, where the first transmission delay is a transmission delay between the first core network device and the application server. The first core network device sends the first transmission delay to a second core network device or a fourth core network device.

The first time information may be in a plurality of forms. For example, the first time information may be a moment at which the application server sends the first data packet. For another example, the first time information includes the following two pieces of information: a moment at which the first core network device sends a second data packet and a moment at which the application server receives the second data packet. For another example, the first time information includes the following three pieces of information: a moment at which the first core network device sends a second data packet, a moment at which the application server receives the second data packet, and a moment at which the application server sends the first data packet. For another example, the first time information includes the following two pieces of information: a moment at which a terminal device sends a third data packet and a moment at which the application server receives the third data packet. For details about the first time information, the second data packet, and the third data packet, refer to the descriptions of S507. Details are not described temporarily.

In other words, after receiving the first data packet from the application server, the first core network device may determine the first transmission delay based on the first time information carried in the first data packet. In this way, the first core network device can obtain the transmission delay between the first core network device and the application server.

When the first core network device provides the first transmission delay for another core network device (for example, the second core network device), the other core network device may adjust a QoS parameter based on a transmission delay between the terminal device and the first core network device and the first transmission delay, for example, adjust a parameter such as a data packet delay budget (packet delay budget, PDB) or a data packet set delay budget (PDU set delay budget, PSDB). In other words, as shown in FIG. 4, based on the communication method in this application, in an end-to-end QoS guarantee process, not only the transmission delay between the terminal device and the first core network device may be referenced, but also the transmission delay between the first core network device and the application server may be referenced, to perform end-to-end service assurance and improve end-to-end service experience.

When the first core network device provides the first transmission delay for another core network device, for example, the fourth core network device, it may be understood that a network status is exposed through the first core network device. In this way, the fourth core network device may perform application layer dynamic adjustment based on the first transmission delay, to perform end-to-end service assurance and improve end-to-end service experience.

It should be understood that names of messages between devices, names of parameters in the messages, or the like in the following embodiments of this application are merely examples, and there may be other names in a specific implementation. This is not specifically limited in embodiments of this application. This applies throughout, and is not repeated below.

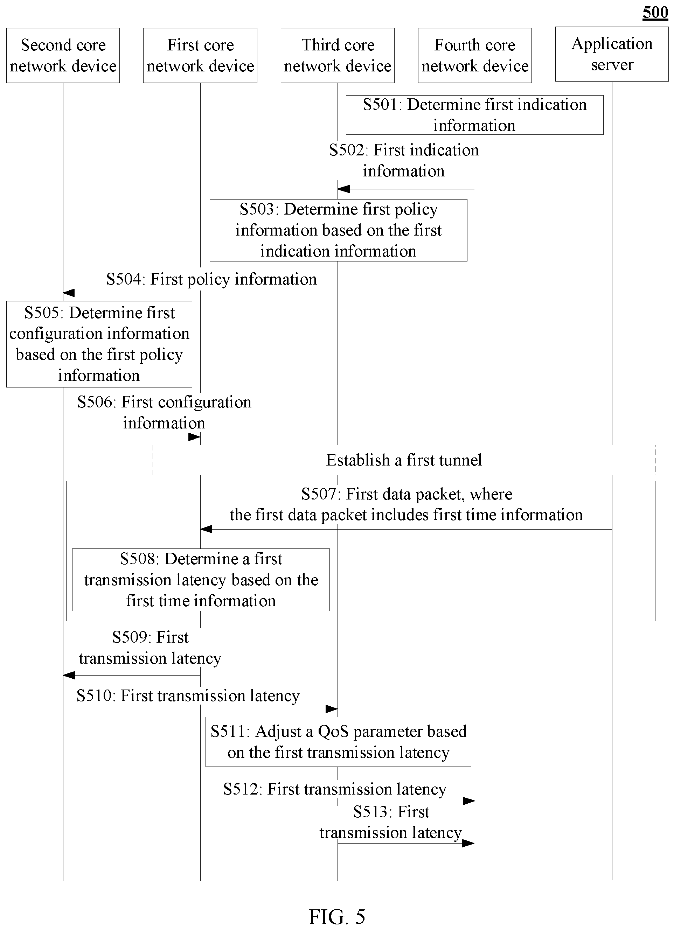

With reference to FIG. 5, the following describes in detail the communication method provided in embodiments of this application. A communication method 500 provided in an embodiment of this application includes the following operations.

S501: Optionally, a fourth core network device determines first indication information.

The fourth core network device may be an application function network element. Using a 5G communication system as an example, the fourth core network device is an AF network element.

The first indication information is described as follows:
The first indication information indicates to determine a first transmission delay. The first transmission delay is a transmission delay between a first core network device and an application server. Using an example in which the first core network device is a user plane function network element (for example, a UPF network element), the first transmission delay may be understood as a delay of an N6 transmission path, and may be denoted as an N6 delay.

Optionally, the first transmission delay may be denoted as an N6 UL delay, that is, an uplink transmission delay from the first core network device to the application server. Alternatively, the first transmission delay may be denoted as an N6 DL delay, that is, a downlink transmission delay from the application server to the first core network device.

Optionally, the first indication information further indicates that the first transmission delay is used to adjust a QoS parameter. The to-be-adjusted QoS parameter includes at least one of the following items.

A first item is a data packet delay budget, for example, a PDB, between a terminal device and the first core network device, to implement dynamic QoS control at a PDU granularity. Optionally, the PDB may be a UL PDB or a DL PDB.

A second item is a data packet set delay budget, for example, a PSDB, between a terminal device and the first core network device, to implement dynamic QoS control at a PDU set granularity. Optionally, the PSDB may be a UL PSDB or a DL PSDB.

In this application, for adjustment on the QoS parameter based on the first transmission delay, refer to the descriptions of S511. Details are not described temporarily.

Optionally, the first indication information further indicates at least one of the following items.

A first item is a measurement mode of the first transmission delay.

For example, the measurement mode indicated by the first indication information is: determining the first transmission delay based on a real-time transport protocol (RTP) header. It may be understood that the first transmission delay is determined by using first time information carried in an RTP header of a downlink data packet (for example, the following first data packet). For details, refer to the descriptions of S507 and S508. Details are not described temporarily.

Alternatively, the measurement mode indicated by the first indication information is: determining the first transmission delay based on a real-time transport control protocol (RTCP) feedback report. It may be understood that the first transmission delay is determined by using first time information carried in an RTCP feedback report in a downlink data packet (for example, the following first data packet). For details, refer to the descriptions of S507 and S508. Details are not described temporarily. Optionally, when the measurement mode indicated by the first indication information is based on the RTCP feedback report, the first indication information further indicates a mode of monitoring an uplink RTCP feedback report. For example, a data type (Packet Type) of the RTCP feedback report is notified.

Alternatively, the measurement mode indicated by the first indication information is: determining the first transmission delay based on an RTP extension header. It may be understood that the first transmission delay is determined by using first time information carried in an RTP extension header of a downlink data packet (for example, the following first data packet).

For another example, the measurement mode indicated by the first indication information is: determining the first transmission delay based on a first tunnel. The first tunnel is a tunnel between the first core network device and the application server, for example, is denoted as an N6 tunnel. The measurement mode may be understood as follows: The first transmission delay is determined by using first time information carried in a first protocol layer of a downlink data packet (for example, the following first data packet). The first protocol layer is a protocol layer corresponding to the first tunnel. The first indication information further includes information required for establishing the first tunnel, for example, endpoint information of the first tunnel and/or an establishment trigger condition of the first tunnel.

A second item is a measurement period of the first transmission delay. For example, the measurement period is 10 ms.

A third item is a measurement trigger condition of the first transmission delay.

A fourth item is a sending period or a reporting period of the first transmission delay. For example, the measurement period is 10 ms.

A fifth item is a sending trigger condition of the first transmission delay. For example, if a variation of the first transmission delay exceeds a specific threshold, reporting of the first transmission delay is triggered.

Optionally, the first indication information further indicates an endpoint of the first tunnel. For example, the first indication information indicates a tunnel endpoint identifier of the first tunnel on an application server side, for example, an IP address or a tunneling protocol on the application server side. When the first indication information indicates the measurement mode of the first transmission delay and the measurement mode is determining the first transmission delay based on the first tunnel, the first indication information further indicates information required for establishing the first tunnel, that is, the endpoint of the first tunnel. The endpoint of the first tunnel is used to establish the first tunnel.

Optionally, the first indication information further indicates the establishment trigger condition of the first tunnel. For example, the first tunnel is established for a first service flow, that is, establishment of the first tunnel is triggered when the first service flow is detected. In this case, the first indication information indicates a service identifier, an IP 5-tuple identifier or 3-tuple identifier, or the like of the first service flow. When the first indication information indicates the endpoint of the first tunnel, the first indication information further indicates the establishment trigger condition of the first tunnel.

Optionally, the first indication information further indicates to feed back the first transmission delay, for example, indicates the fourth core network device to expose the first transmission delay. Further, the first indication information further includes endpoint information of the fourth core network device, and the endpoint information is used to send the first transmission delay to the fourth core network device. In this case, the communication method in this embodiment of this application further includes S512 or S513. Details are not described temporarily.

It should be noted that S501 is an optional step. For example, when the fourth core network device triggers determining of the first transmission delay, the fourth core network device performs S501. For another example, when a core network device other than the fourth core network device triggers determining of the first transmission delay, the fourth core network device does not perform S501.

For the fourth core network device, the fourth core network device performs S502 after determining the first indication information.

S502: Optionally, the fourth core network device sends the first indication information to a third core network device. Correspondingly, the third core network device receives the first indication information from the fourth core network device.

For the first indication information, refer to the descriptions of S501. Details are not described again.

The third core network device may be a policy control function network element. Using a 5G communication system as an example, the third core network device is a PCF network element.

For example, the first indication information is included in an AF request (AF request). Specifically, the AF network element may send the first indication information to the PCF network element through an NEF network element.

It should be noted that S502 is an optional step. For example, the first indication information may be preconfigured on a third core network device side. In this case, S502 is not performed. The preconfiguration is autonomous configuration by an operator or configuration based on negotiation between an operator and a third-party application.

For the third core network device, the third core network device performs S503 after obtaining the first indication information.

S503: Optionally, the third core network device determines first policy information based on the first indication information.

The first policy information is described as follows:
The first policy information indicates to determine the first transmission delay. For the first transmission delay, refer to the descriptions of S501. Details are not described again.

Optionally, the first policy information further indicates at least one of the following: the measurement mode of the first transmission delay, the measurement period of the first transmission delay, the measurement trigger condition of the first transmission delay, the sending period of the first transmission delay, or the sending trigger condition of the first transmission delay. For details, refer to the descriptions of S501. Details are not described again.

Optionally, the first policy information further indicates the endpoint of the first tunnel and/or the establishment trigger condition of the first tunnel. For details, refer to the descriptions of S501. Details are not described again.

Optionally, the first policy information further indicates to feed back the first transmission delay. For example, the first policy information indicates to send the first transmission delay to the third core network device. In this case, the communication method in this embodiment of this application further includes S509 and S510, to feed back the first transmission delay to the fourth core network device through the third core network device, as shown in S513. Details are not described temporarily. For example, the first policy information is included in a PCC rule.

It should be noted that S503 is an optional step. For example, the first policy information is preconfigured on the third core network device side. In this case, S503 is not performed. The preconfiguration is autonomous configuration by an operator or configuration based on negotiation between an operator and a third-party application.

For the third core network device, the third core network device performs S504 after determining the first policy information.

S504: Optionally, the third core network device sends the first policy information to a second core network device. Correspondingly, the second core network device receives the first policy information from the third core network device.

For the first policy information, refer to the descriptions of S503. Details are not described again.

The second core network device may be a session management function network element. Using a 5G communication system as an example, the second core network device is an SMF network element.

It should be noted that S504 is an optional step. For example, the first policy information is preconfigured on a second core network device side. In this case, S504 is not performed. The preconfiguration is autonomous configuration by an operator or configuration based on negotiation between an operator and a third-party application.

S505: Optionally, the second core network device determines first configuration information based on the first policy information.

The first configuration information is described as follows:
The first configuration information indicates to determine the first transmission delay.

Optionally, the first configuration information further indicates at least one of the following: the measurement mode of the first transmission delay, the measurement period of the first transmission delay, the measurement trigger condition of the first transmission delay, the sending period of the first transmission delay, or the sending trigger condition of the first transmission delay. For details, refer to the descriptions of S501. Details are not described again.

Optionally, the first configuration information further indicates the endpoint of the first tunnel and/or the establishment trigger condition of the first tunnel. For details, refer to the descriptions of S501. Details are not described again.

Optionally, the first configuration information further indicates to feed back the first transmission delay, for example, indicates to report the first transmission delay to the second core network device. In this case, the communication method in this embodiment of this application further includes S509. Details are not described temporarily.

For example, the first configuration information includes an N6 delay measurement configuration and a data packet detection rule (PDR). The N6 delay measurement configuration may include the measurement mode of the first transmission delay, the measurement period of the first transmission delay, the measurement trigger condition of the first transmission delay, the sending period of the first transmission delay, and the sending trigger condition of the first transmission delay. The PDR is used by the first core network device to determine a to-be-detected service flow.

It should be noted that S505 is an optional step. For example, the first configuration information may be preconfigured on the second core network device side. In this case, S505 is not performed. The preconfiguration is autonomous configuration by an operator or configuration based on negotiation between an operator and a third-party application.

For the second core network device, the second core network device performs S506 after determining the first configuration information.

S506: The second core network device sends the first configuration information to the first core network device. Correspondingly, the first core network device receives the first configuration information from the second core network device.

For the first configuration information, refer to the descriptions of S505. Details are not described again.

The first core network device may be a user plane function network element. Using a 5G communication system as an example, the first core network device is a UPF network element.

For the first core network device, the first core network device determines the first transmission delay based on the first configuration information. Specifically, the communication method 500 in this embodiment of this application further includes the following steps.

S507: The application server sends the first data packet to the first core network device. Correspondingly, the first core network device receives the first data packet from the application server.

The first data packet includes the first time information.

The first time information is described as follows:
Example 1: The first time information may be a moment at which the application server sends the first data packet, for example, denoted as T₁₋₁.

It should be noted that, using an example in which the first data packet includes media data, the first data packet may also be referred to as a media data packet. The moment at which the application server sends the first data packet may be a sampling generation moment of the media data, that is, an encoding generation moment of the media data packet. In other words, a time difference between an encoding moment of the media data packet and a sending moment of the media data packet is ignored. The sending moment (T₁₋₁) of the first data packet may be carried at an RTP layer of the first data packet, for example, corresponding to timestamp information at the RTP layer.

Example 2: Before S507, the communication method in this application further includes the following step a.

Step a: The first core network device sends a second data packet to the application server. Correspondingly, the application server receives the second data packet from the first core network device. The second data packet includes a moment at which the first core network device sends the second data packet.

In other words, for the application server, the application server receives the second data packet from the first core network device, and then sends the first data packet, that is, first performs step a, and then performs S507.

In Example 2, in a possible implementation, the first time information of the first data packet includes the following two pieces of information: the moment (for example, denoted as T₂₋₁) at which the first core network device sends the second data packet and a moment (for example, denoted as T₂₋₂) at which the application server receives the second data packet.

In Example 2, in another possible implementation, the first time information of the first data packet includes the following three pieces of information: the moment (for example, denoted as T₂₋₁) at which the first core network device sends the second data packet, a moment (for example, denoted as T₂₋₂) at which the application server receives the second data packet, and a moment (for example, denoted as T₂₋₃) at which the application server sends the first data packet.

It should be noted that, in Example 2, a relationship between the first data packet and the second data packet is described as follows:
In terms of a time sequence, the application server first receives the second data packet, and then sends the first data packet. In this way, for the application server, the first time information (for example, T₂₋₁ and T₂₋₂, or T₂₋₁, T₂₋₂, and T₂₋₃) may be carried in the first data packet, so that the first core network device determines the first transmission delay based on the first time information.

In addition, the first data packet may be a service data packet, for example, a service data packet sent by the application server to the terminal device through the first core network device. The second data packet may also be a service data packet, for example, a service data packet sent by the terminal device to the application server through the first core network device. The first data packet and the second data packet may be data packets of a same service, or may be data packets of different services. This is not limited in this application.

Alternatively, the second data packet may be a data packet transmitted only between the first core network device and the application server, that is, the second data packet is sent by the first core network device to the application server.

It should be supplemented that, in a possible example, the second data packet further includes indication information X. The indication information X indicates to use the first data packet to carry the following two pieces of information: the moment (for example, denoted as T₂₋₁) at which the first core network device sends the second data packet and the moment (for example, denoted as T₂₋₂) at which the application server receives the second data packet. In this case, after the application server receives the second data packet, in response to the indication information X, the application server adds the foregoing two pieces of time information (namely, T₂₋₁ and T₂₋₂) to the first data packet. In this way, the first data packet sent by the application server carries the foregoing two pieces of time information (namely, T₂₋₁ and T₂₋₂).

Example 3: Before S507, the communication method in this application further includes: The terminal device sends a third data packet to the application server. Correspondingly, the application server receives the third data packet from the terminal device. Specifically, the following step b and step c are included.

Step b: The terminal device sends the third data packet to the first core network device. Correspondingly, the first core network device receives the third data packet from the terminal device. The third data packet includes a moment at which the terminal device sends the third data packet.

Step c: The first core network device sends the third data packet to the application server. Correspondingly, the application server receives the third data packet from the first core network device.

In this case, for the application server, the application server receives the third data packet from the terminal device, and then sends the first data packet, that is, first performs step c, and then performs S507. In this case, the first time information in the first data packet includes the following two pieces of information: the moment (for example, denoted as T₃₋₁) at which the terminal device sends the third data packet and a moment (for example, denoted as T₃₋₂) at which the application server receives the third data packet.

It should be noted that, in Example 3, a relationship between the first data packet and the third data packet is described as follows:

In terms of a time sequence, the application server first receives the third data packet, and then sends the first data packet. In this way, for the application server, the first time information (for example, T₃₋₁ and T₃₋₂) may be carried in the first data packet, so that the first core network device determines the first transmission delay based on the first time information.

In addition, the first data packet may be a service data packet, for example, a service data packet sent by the application server to the terminal device through the first core network device. The third data packet may also be a service data packet, for example, a service data packet sent by the terminal device to the application server through the first core network device. The first data packet and the third data packet may be data packets of a same service.

It should be supplemented that, in a possible example, the third data packet further includes indication information Y. The indication information Y indicates to use the first data packet to carry the following information: the moment (for example, denoted as T₃₋₁) at which the terminal device sends the third data packet. In this case, after the application server receives the third data packet, in response to the indication information Y, the application server adds the foregoing time information (namely, T₃₋₁) to the first data packet. In this way, the first data packet sent by the application server carries the foregoing time information (namely, T₃₋₁).

Optionally, the first time information is carried in the following location.

In a possible implementation, for the RTP or the RTCP, a manner of carrying the first time information is as follows:
Manner 1: The first time information is carried in an RTP header of the first data packet.

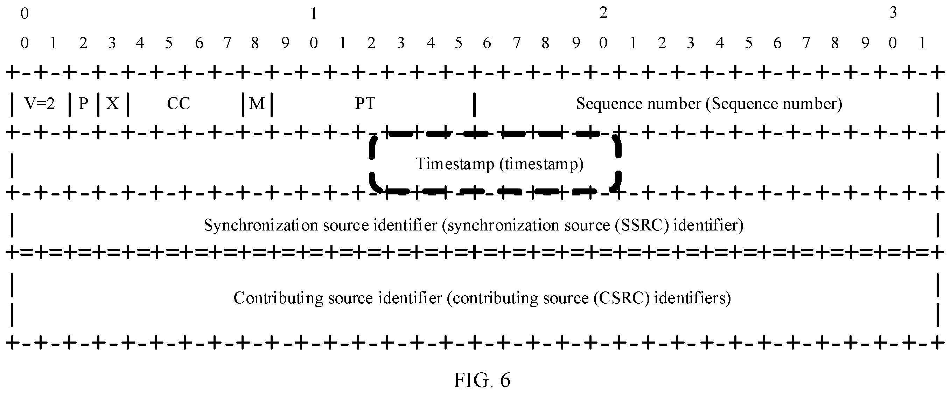

FIG. 6 is used as an example. The first time information is a timestamp (timestamps), and the timestamp is carried in the RTP header.

Manner 2: The first time information is carried in an RTCP sender report (SR) field of the first data packet.

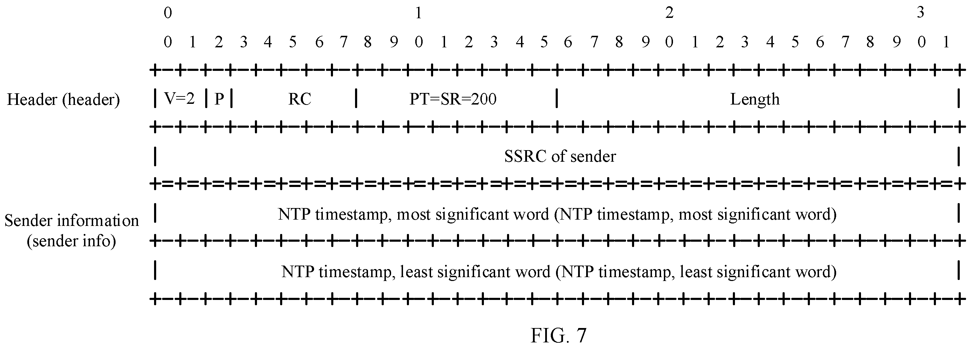

FIG. 7 is used as an example. The first time information is a timestamp, and the timestamp is carried in the RTCP SR field. In FIG. 7, a PT field, that is, a data packet type (Packet Type) field, indicates a specific type of the RTCP. When PT = 200, it indicates that the RTCP carries the SR field, that is, sender info.

Manner 3: The first time information is carried in an RTP extension header of the first data packet.

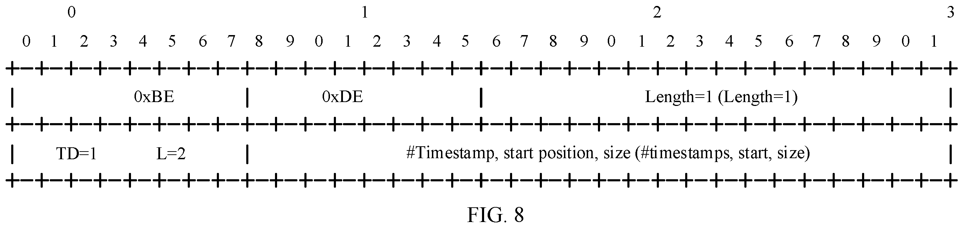

FIG. 8 is used as an example. The first time information is a timestamp, and the timestamp is carried in the RTP extension header.

In another possible implementation, for a case in which the first tunnel is established, a manner of carrying the first time information is as follows:
Manner 4: The first time information is carried in the first protocol layer of the first data packet. The first protocol layer is a protocol layer for a tunnel between the first core network device and the application server.

It should be noted that, when the measurement mode of the first transmission delay is determining the first transmission delay based on an RTP header, the first time information is carried in the RTP header of the first data packet. When the measurement mode of the first transmission delay is determining the first transmission delay based on an RTCP feedback report, the first time information is carried in the RTCP SR field of the first data packet. When the measurement mode of the first transmission delay is determining the first transmission delay based on an RTP extension header, the first time information is carried in the RTP extension header of the first data packet. When the measurement mode of the first transmission delay is determining the first transmission delay based on the first tunnel, the first time information is carried in the first protocol layer of the first data packet.

It should be noted that, when the measurement mode of the first transmission delay is determining the first transmission delay based on the first tunnel, for the first core network device, after receiving the first configuration information, the first core network device first establishes the first tunnel, and then performs S507. For a process of establishing the first tunnel, refer to a related technology. Details are not described.

For the first core network device, the first core network device performs S508 after receiving the first data packet.

S508: The first core network device determines the first transmission delay based on the first time information.

The first transmission delay is a transmission delay between the first core network device and the application server. For details, refer to the descriptions of S501. Details are not described again.

For example, an implementation process of S508 includes the following.

Example 1: The first time information is the moment at which the application server sends the first data packet, for example, denoted as T₁₋₁.

In this case, S508 includes: The first core network device determines the first transmission delay based on the moment (for example, denoted as T₁₋₁) at which the application server sends the first data packet and a moment (for example, denoted as T₁₋₂) at which the first core network device receives the first data packet.

For example, the first transmission delay is T = T₁₋₂ - T₁₋₁. T represents the first transmission delay. T₁₋₁ represents the moment at which the application server sends the first data packet. T₁₋₂ represents the moment at which the first core network device receives the first data packet.

Example 2-1: The first time information includes the following two pieces of information: the moment (for example, denoted as T₂₋₁) at which the first core network device sends the second data packet and the moment (for example, denoted as T₂₋₂) at which the application server receives the second data packet.

In this case, S508 includes: The first core network device determines the first transmission delay based on the moment (for example, denoted as T₂₋₁) at which the first core network device sends the second data packet and the moment (for example, denoted as T₂₋₂) at which the application server receives the second data packet.

For example, the first transmission delay is T = T₂₋₂ - T₂₋₁. T represents the first transmission delay. T₂₋₁ represents the moment at which the first core network device sends the second data packet. T₂₋₂ represents the moment at which the application server receives the second data packet.

Example 2-2: The first time information includes the following three pieces of information: the moment (for example, denoted as T₂₋₁) at which the first core network device sends the second data packet, the moment (for example, denoted as T₂₋₂) at which the application server receives the second data packet, and the moment (for example, denoted as T₂₋₃) at which the application server sends the first data packet.

In this case, S508 includes: The first core network device determines the first transmission delay based on the moment (for example, denoted as T₂₋₁) at which the first core network device sends the second data packet, the moment (for example, denoted as T₂₋₂) at which the application server receives the second data packet, the moment (for example, denoted as T₂₋₃) at which the application server sends the first data packet, and a moment (for example, denoted as T₂₋₄) at which the first core network device receives the first data packet.

For example, the first transmission delay is T = (T₂₋₂ - T₂₋₁ + T₂₋₄ - T₂₋₃)/2. T represents the first transmission delay. T₂₋₁ represents the moment at which the first core network device sends the second data packet. T₂₋₂ represents the moment at which the application server receives the second data packet. T₂₋₃ represents the moment at which the application server sends the first data packet. T₂₋₄ represents the moment at which the first core network device receives the first data packet.

Example 3: The first time information includes the following two pieces of information: the moment (for example, denoted as T₃₋₁) at which the terminal device sends the third data packet and the moment (for example, denoted as T₃₋₂) at which the application server receives the third data packet.

In this case, S508 includes: When the first data packet and the third data packet include a same moment, and the same moment is the moment at which the terminal device sends the third data packet, the first core network device determines the first transmission delay based on a moment (for example, denoted as T₃₋₃) at which the first core network device sends the third data packet and the moment (for example, denoted as T₃₋₂) at which the application server receives the third data packet.

That the first data packet and the third data packet include the same moment and the same moment is the moment at which the terminal device sends the third data packet means that an association relationship exists between the first data packet and the third data packet. For example, the first data packet carries 'the moment at which the application server receives the third data packet'. In this case, the first core network device may determine the first transmission delay based on the moment at which the first core network device sends the third data packet and 'the moment at which the application server receives the third data packet' carried in the first data packet.

For example, the first transmission delay is T = T₃₋₂ - T₃₋₃. T represents the first transmission delay. T₃₋₃ represents the moment at which the first core network device sends the third data packet. T₃₋₂ represents the moment at which the application server receives the third data packet. In this case, the first transmission delay may also be an uplink N6 delay.

It should be understood that, in this application, the first core network device may determine the first transmission delay with reference to time information carried in a plurality of data packets. For example, the first core network device performs a first measurement, that is, determines one transmission delay based on time information carried in one first data packet. Then, the first core network device performs a second measurement, that is, determines a second measured transmission delay based on time information carried in a second first data packet. According to this cycle, measurement is repeated N times. Then, an average value (or a minimum value or a maximum value) of transmission latencies determined in N measurements is used as the first transmission delay. This is not limited in this application. N is a positive integer greater than or equal to 2.

For the first core network device, the first core network device performs S509 after determining the first transmission delay.

S509: Optionally, the first core network device sends the first transmission delay to the second core network device. Correspondingly, the second core network device receives the first transmission delay from the first core network device.

For the first transmission delay, refer to the descriptions of S508. Details are not described again.

For example, when the first configuration information indicates the sending period of the first transmission delay, the first core network device sends the first transmission delay to the second core network device based on the sending period indicated by the first configuration information.

For another example, the first configuration information indicates the sending trigger condition of the first transmission delay. For example, the sending trigger condition is that a 'transmission delay reporting' operation is performed when a transmission delay is greater than (or equal to) a first threshold. In this case, if the first transmission delay is greater than (or equal to) the first threshold, the first core network device sends the first transmission delay to the second core network device. On the contrary, if the first transmission delay is less than the first threshold, the first core network device does not send the first transmission delay.

Optionally, the second core network device adjusts the QoS parameter based on the first transmission delay. For example, the to-be-adjusted QoS parameter includes a PDB, to implement dynamic QoS control at a PDU granularity. For another example, the to-be-adjusted QoS parameter includes a PSDB, to implement dynamic QoS control at a PDU set granularity. Alternatively, the second core network device triggers re-discovery of an edge application server or migration of an edge application server based on the first transmission delay. For example, if the current first transmission delay is excessively long (that is, an N6 delay is excessively long), it means that quality of a link between the current application server and the UPF network element is relatively poor, and the second core network device may trigger an application side to select a new edge application server or migrate to a new edge application server.

It should be noted that S509 is an optional step. In S509, the first core network device provides the first transmission delay for the second core network device. When S509 is not performed, in a possible implementation, the second core network device may alternatively obtain the first transmission delay from the fourth core network device. The fourth core network device may be an application function network element, for example, an AF network element. In another possible implementation, the second core network device may alternatively obtain the first transmission delay from a fifth core network device. The fifth core network device may be a network data analytics function network element, for example, an NWDAF network element. In other words, in this application, for the second core network device, the second core network device may obtain the first transmission delay from the first core network device, the fourth core network device, or the fifth core network device.

S510: Optionally, the second core network device sends the first transmission delay to the third core network device. Correspondingly, the third core network device receives the first transmission delay from the second core network device.

S511: Optionally, the third core network device adjusts the QoS parameter based on the first transmission delay.

For example, the to-be-adjusted QoS parameter includes a PDB, to implement dynamic QoS control at a PDU granularity.

For another example, the to-be-adjusted QoS parameter includes a PSDB, to implement dynamic QoS control at a PDU set granularity.

Optionally, in some embodiments, if the first indication information indicates that the first transmission delay is used to adjust the QoS parameter, S511 includes: In response to the first indication information, the third core network device adjusts the QoS parameter based on the first transmission delay, to implement dynamic QoS control at different granularities.

Optionally, in some embodiments, if the first indication information indicates to feed back the first transmission delay, the communication method in this application further includes the following step.

For example, for the first core network device, the first core network device performs S512 after performing S508.

S512: Optionally, the first core network device sends the first transmission delay to the fourth core network device. Correspondingly, the fourth core network device receives the first transmission delay from the first core network device.

In other words, the first core network device feeds back the first transmission delay to the fourth core network device, to implement network information exposure.

Optionally, the fourth core network device triggers re-discovery of an edge application server or migration of an edge application server based on the first transmission delay. For example, if the current first transmission delay is excessively long (that is, an N6 delay is excessively long), it means that quality of a link between the current application server and the UPF network element is relatively poor, and the fourth core network device may trigger to select a new edge application server or migrate to a new edge application server.

For another example, for the third core network device, the third core network device performs S513 after performing S510.

S513: Optionally, the third core network device sends the first transmission delay to the fourth core network device. Correspondingly, the fourth core network device receives the first transmission delay from the third core network device.

In other words, the third core network device feeds back the first transmission delay to the fourth core network device, to implement network information exposure.

Optionally, the fourth core network device triggers re-discovery of an edge application server or migration of an edge application server based on the first transmission delay. For example, if the current first transmission delay is excessively long (that is, an N6 delay is excessively long), it means that quality of a link between the current application server and the UPF network element is relatively poor, and the fourth core network device may trigger to select a new edge application server or migrate to a new edge application server.

It should be noted that, in this application, S512 and S513 are optional steps. Specifically, for example, when the first core network device performs S512, the first core network device may not perform S513. Alternatively, on the contrary, when the first core network device performs S513, the first core network device may not perform S512. This is not limited in this application.

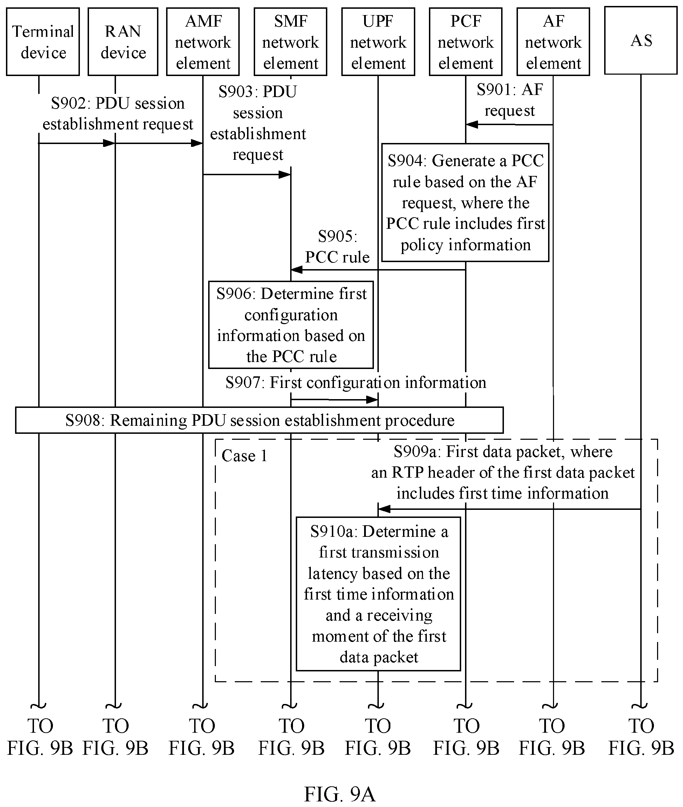

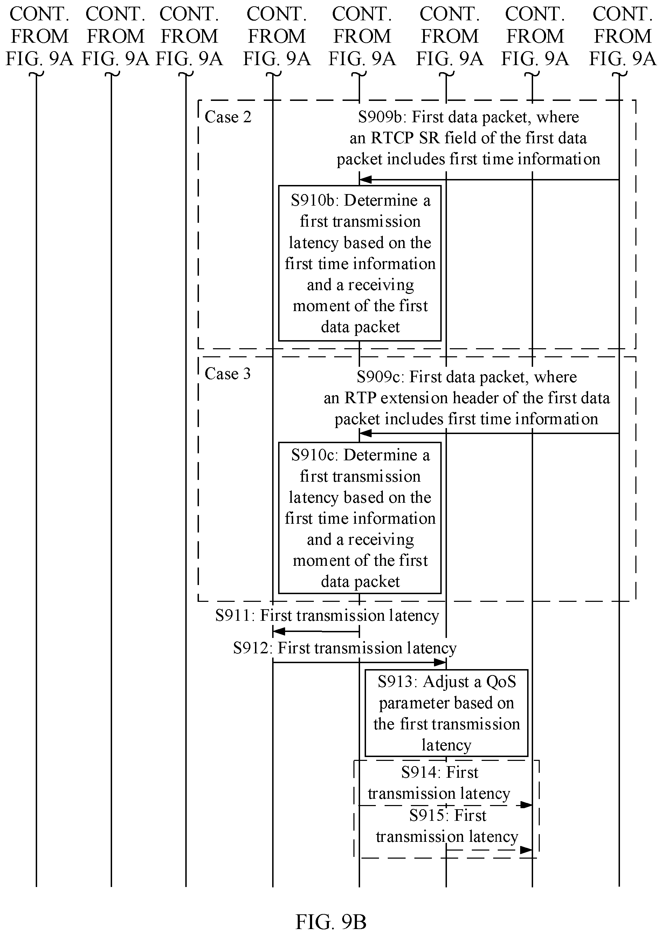

With reference to an example shown in FIG. 9A and FIG. 9B, the following describes in detail a specific implementation of the communication method shown in FIG. 5.

FIG. 9A and FIG. 9B are a schematic flowchart of a communication method according to an embodiment of this application. The first core network device in FIG. 5 may be a UPF network element shown in FIG. 9A and FIG. 9B, the second core network device in FIG. 5 may be an SMF network element shown in FIG. 9A and FIG. 9B, the third core network device in FIG. 5 may be a PCF network element shown in FIG. 9A and FIG. 9B, the fourth core network device in FIG. 5 may be an AF network element shown in FIG. 9A and FIG. 9B, and the application server in FIG. 5 may be an AS shown in FIG. 9A and FIG. 9B.

Specifically, in FIG. 9A and FIG. 9B, the communication method in this embodiment of this application includes the following steps.

S901: Optionally, the AF network element sends an AF request to the PCF network element. Correspondingly, the PCF network element receives the AF request from the AF network element.

The AF request includes service flow description information (for example, an SDF) and first indication information.

The service flow description information indicates description information of a service flow corresponding to an application, for example, information such as an IP 5-tuple, an IP 3-tuple, and an application identity (application identity, APP ID), to assist a network side in determining, based on the service flow description information, that a data packet is a service flow data packet of the corresponding application.

For the first indication information, refer to the descriptions of S501. Details are not described again.

It should be understood that, in this application, an implementation process of S901 may include the following.

In a possible implementation, the AF network element is in a trusted domain, and the AF network element sends the AF request to the PCF network element. To be specific, the AF network element sends the AF request to the PCF network element by invoking a service interface, for example, an Npcf_PolicyAuthorization service interface, of the PCF network element.

In another possible implementation, the AF network element is in an untrusted domain, and the AF network element sends the AF request to the PCF network element through an NEF network element. To be specific, the AF network element sends the AF request to the NEF network element by invoking a service interface, for example, an Nnef_AFSessionWithQoS service interface, of the NEF network element, and the NEF network element sends the AF request to the PCF network element by invoking a service interface, for example, an Npcf_PolicyAuthorization service interface, of the PCF.

S902: Optionally, when a terminal device initiates a PDU session establishment procedure, the terminal device sends a PDU session establishment request (PDU session Establishment Request) to an AMF network element. Correspondingly, the AMF network element receives the PDU session establishment request from the terminal device.

The PDU session establishment request is used to request to establish a PDU session.

S903: Optionally, the AMF network element sends a PDU session establishment request to the SMF network element. Correspondingly, the SMF network element receives the PDU session establishment request from the AMF network element.

For example, for an implementation process of S902 and S903, refer to a related technology. Details are not described.

It should be understood that the PDU session establishment request may also be replaced with a PDU session modification request (PDU session Modification Request). For example, when the terminal device initiates a PDU session modification procedure, the terminal device sends a PDU session modification request to the AMF network element. Correspondingly, the AMF network element receives the PDU session modification request from the terminal device. The AMF network element sends a PDU session modification request to the SMF network element. Correspondingly, the SMF network element receives the PDU session modification request from the AMF network element. The PDU session modification request is used to request to modify a PDU session. For details, refer to a related technology. Details are not described.

S904: Optionally, the PCF network element generates a PCC rule based on the AF request.

Optionally, the PCF network element generates the PCC rule based on the AF request and/or a local configuration.

The PCC rule includes first policy information. For the first policy information, refer to the descriptions of S503. Details are not described again.

S905: Optionally, the PCF network element sends the PCC rule to the SMF network element. Correspondingly, the SMF network element receives the PCC rule from the PCF network element.

For example, when the terminal device initiates a PDU session establishment procedure (that is, S902 is performed), the SMF network element initiates a session management policy association establishment procedure (SM Policy Association procedure), and obtains the PCC rule from the PCF network element by using the SM policy association procedure.

For another example, when the terminal device initiates a PDU session modification procedure, the SMF network element initiates a session management policy association modification procedure, and obtains the PCC rule from the PCF network element by using the session management policy association modification procedure.

For another example, when the terminal device does not initiate a PDU session establishment or modification procedure, the PCF network element initiates a session management policy association modification procedure, and sends the PCC rule to the SMF network element by using the session management policy association modification procedure.

For the SMF network element, the SMF network element performs S906 after obtaining the PCC rule.

S906: Optionally, the SMF network element determines first configuration information based on the PCC rule and/or a local configuration.

For the first configuration information, refer to the descriptions of S505. Details are not described again.

S907: Optionally, the SMF network element sends the first configuration information to the UPF network element. Correspondingly, the UPF network element receives the first configuration information from the SMF network element.

For example, the SMF network element sends the first configuration information to the UPF network element through an N4 interface.

For example, the SMF network element sends the first configuration information to the UPF network element by using an N4 session establishment (N4 Session Establishment) procedure. Correspondingly, the UPF network element receives the first configuration information from the SMF network element by using the N4 session establishment procedure.

For another example, the SMF network element sends the first configuration information to the UPF network element by using an N4 session modification (N4 Session Modification) procedure. Correspondingly, the UPF network element receives the first configuration information from the SMF network element by using the N4 session modification procedure.

For the terminal device, the AMF network element, the SMF network element, and the UPF network element, S908 is further performed.

S908: Optionally, when the PDU session establishment procedure is performed, the terminal device, the AMF network element, the SMF network element, and the UPF network element perform a remaining PDU session establishment (remaining steps for PDU session Establishment) procedure.

For the PDU session establishment procedure, refer to a related 3GPP technical specification. Details are not described.

It should be understood that when the PDU session modification procedure is performed, the terminal device, the AMF network element, the SMF network element, and the UPF network element perform a remaining PDU session modification (remaining steps for PDU session Modification) procedure.

For the PDU session modification procedure, refer to a related 3GPP technical specification. Details are not described.

The following describes a process of determining a first transmission delay.

For different determining manners (or measurement modes), the following three cases are used for description.

Case 1: An RTP header of a first data packet includes first time information. In this case, the communication method in this application further includes the following steps.

S909a: The application server AS sends the first data packet to the UPF network element. Correspondingly, the UPF network element receives the first data packet from the application server AS.

The RTP header of the first data packet includes the first time information, and the first time information is a moment at which the application server AS sends the first data packet. For the first time information, refer to the descriptions of Manner 1 in S507. Details are not described again.

S910a: The UPF network element determines the first transmission delay based on the first time information and a receiving moment of the first data packet.

For an implementation process of S910a, refer to the descriptions of S508. Details are not described again.

Case 2: An SR field of an RTCP header of a first data packet includes first time information. In this case, the communication method in this application further includes the following steps.

S909b: The application server AS sends the first data packet to the UPF network element. Correspondingly, the UPF network element receives the first data packet from the application server AS.

The SR field of the RTCP header of the first data packet includes the first time information, and the first time information is a moment at which the application server AS sends the first data packet. For the first time information, refer to the descriptions of Manner 2 in S507. Details are not described again.

S910b: The UPF network element determines the first transmission delay based on the first time information and a receiving moment of the first data packet.

For an implementation process of S910b, refer to the descriptions of S508. Details are not described again.

Case 3: An RTP extension header of a first data packet includes first time information. In this case, the communication method in this application further includes the following steps.

S909c: The application server AS sends the first data packet to the UPF network element. Correspondingly, the UPF network element receives the first data packet from the application server AS.

The RTP extension header of the first data packet includes the first time information, and the first time information is a moment at which the application server AS sends the first data packet. For the first time information, refer to the descriptions of Manner 3 in S507. Details are not described again.

S910c: The UPF network element determines the first transmission delay based on the first time information and a receiving moment of the first data packet.

For an implementation process of S910c, refer to the descriptions of S508. Details are not described again.

For the UPF network element, the UPF network element performs S911 after obtaining the first transmission delay.

S911: Optionally, the UPF network element sends the first transmission delay to the SMF network element. Correspondingly, the SMF network element receives the first transmission delay from the UPF network element.

For example, the UPF network element sends the first transmission delay to the SMF network element based on the first configuration information, or the UPF network element sends the first transmission delay to the SMF network element based on the first configuration information and a local configuration. For details, refer to the descriptions of S509. Details are not described again.

For another example, the UPF network element sends the first transmission delay to the SMF network element by using an N4 session message.

Optionally, the SMF network element may adjust a QoS parameter based on the first transmission delay. In this case, neither of S912 and S913 needs to be performed.

S912: Optionally, the SMF network element sends the first transmission delay to the PCF network element. Correspondingly, the PCF network element receives the first transmission delay from the SMF network element.

For an implementation process of S912, refer to the descriptions of S510. Details are not described again.

S913: Optionally, the PCF network element adjusts the QoS parameter based on the first transmission delay.

For an implementation process of S913, refer to the descriptions of S511. Details are not described again.

S914: Optionally, the UPF network element sends the first transmission delay to the AF network element. Correspondingly, the AF network element receives the first transmission delay from the UPF network element. Specifically, the UPF network element exposes the first transmission delay to the AF network element by using an Nupf_EventExposure service or through the NEF network element.

S915: Optionally, the PCF network element sends the first transmission delay to the AF network element. Correspondingly, the AF network element receives the first transmission delay from the PCF network element.

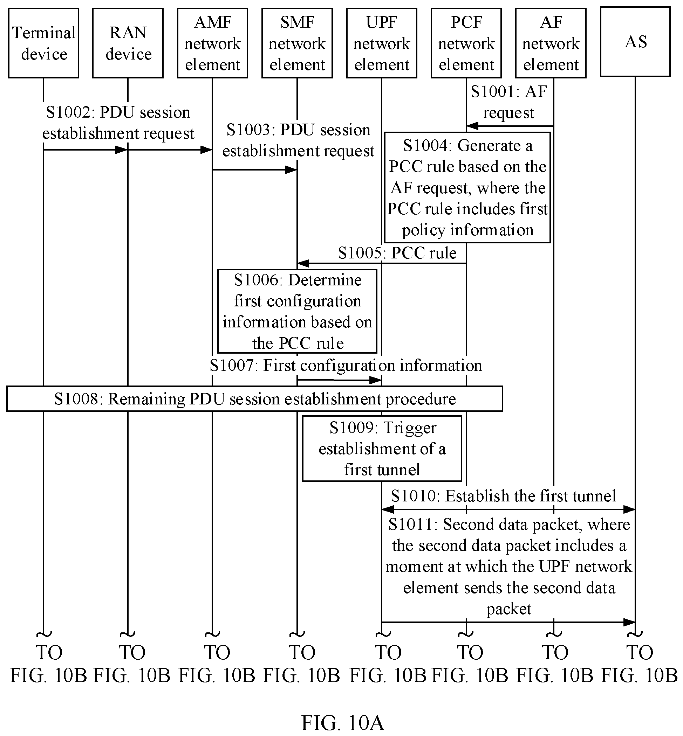

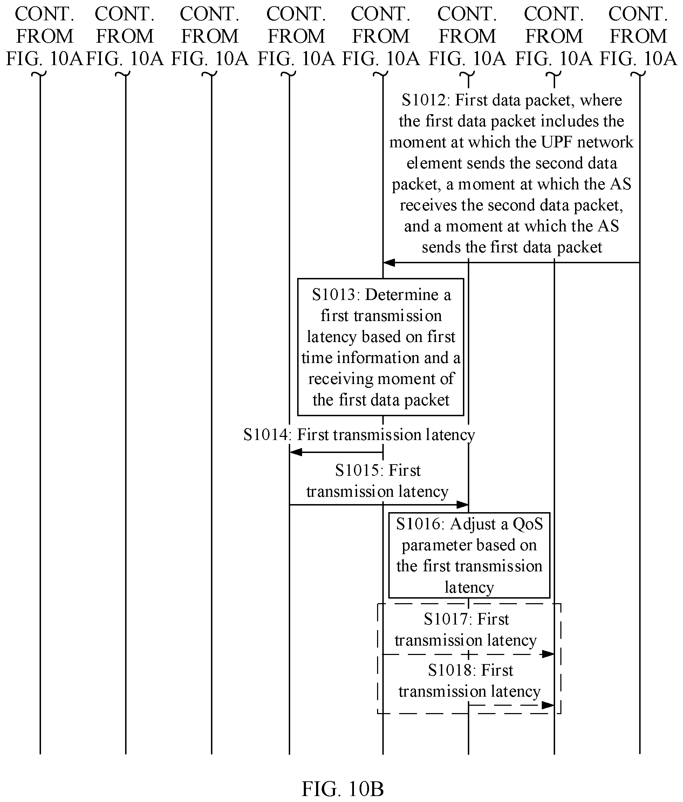

With reference to an example shown in FIG. 10A and FIG. 10B, the following describes in detail a specific implementation of the communication method shown in FIG. 5.

FIG. 10A and FIG. 10B are a schematic flowchart of a communication method according to an embodiment of this application. The first core network device in FIG. 5 may be a UPF network element shown in FIG. 10A and FIG. 10B, the second core network device in FIG. 5 may be an SMF network element shown in FIG. 10A and FIG. 10B, the third core network device in FIG. 5 may be a PCF network element shown in FIG. 10A and FIG. 10B, the fourth core network device in FIG. 5 may be an AF network element shown in FIG. 10A and FIG. 10B, and the application server in FIG. 5 may be an AS shown in FIG. 10A and FIG. 10B.

Specifically, in FIG. 10A and FIG. 10B, the communication method in this embodiment of this application includes the following steps.

S1001: Optionally, the AF network element sends an AF request to the PCF network element. Correspondingly, the PCF network element receives the AF request from the AF network element.

The AF request includes service flow description information (for example, an SDF) and first indication information.

For the service flow description information, refer to the descriptions of S901. Details are not described again.

It should be noted that in S1001, the first indication information further indicates an endpoint of a first tunnel and/or an establishment trigger condition of the first tunnel. For details, refer to the descriptions of S501. Details are not described again.

S1002: Optionally, when a terminal device initiates a PDU session establishment procedure, the terminal device sends a PDU session establishment request (PDU session Establishment Request) to an AMF network element. Correspondingly, the AMF network element receives the PDU session establishment request from the terminal device.

The PDU session establishment request is used to request to establish a PDU session.

S1003: Optionally, the AMF network element sends a PDU session establishment request to the SMF network element. Correspondingly, the SMF network element receives the PDU session establishment request from the AMF network element.

S1004: Optionally, the PCF network element generates a PCC rule based on the AF request.

Optionally, the PCF network element generates the PCC rule based on the AF request and a local configuration.

The PCC rule includes first policy information. For the first policy information, refer to the descriptions of S503. Details are not described again.

It should be noted that in S1004, the first policy information further indicates the endpoint of the first tunnel and/or the establishment trigger condition of the first tunnel. For details, refer to the descriptions of S503. Details are not described again.

S1005: Optionally, the PCF network element sends the PCC rule to the SMF network element. Correspondingly, the SMF network element receives the PCC rule from the PCF network element.

For the SMF network element, the SMF network element performs S1006 after obtaining the PCC rule.

S1006: Optionally, the SMF network element determines first configuration information based on the PCC rule.

For the first configuration information, refer to the descriptions of S505. Details are not described again.

It should be noted that in S1006, the first configuration information further indicates the endpoint of the first tunnel and/or the establishment trigger condition of the first tunnel. For details, refer to the descriptions of S505. Details are not described again.

S1007: Optionally, the SMF network element sends the first configuration information to the UPF network element. Correspondingly, the UPF network element receives the first configuration information from the SMF network element.

For the terminal device, the AMF network element, the SMF network element, and the UPF network element, S1008 is further performed.

S1008: Optionally, when the PDU session establishment procedure is performed, the terminal device, the AMF network element, the SMF network element, and the UPF network element perform a remaining PDU session establishment (remaining steps for PDU session Establishment) procedure.

For the PDU session establishment procedure, refer to a related 3GPP technical specification. Details are not described.

For an implementation process of S1001 to S1008, refer to the descriptions of S901 to S908. Details are not described again.

S1009: The UPF network element triggers establishment of the first tunnel.

For example, the first configuration information further indicates the establishment trigger condition of the first tunnel. For example, the first tunnel is established for a first service flow, that is, establishment of the first tunnel is triggered when the first service flow is detected. In this case, the first indication information indicates a service identifier, an IP 5-tuple identifier or 3-tuple identifier, or the like of the first service flow. If the UPF network element detects a service flow of a first service, for example, identifies an IP 5-tuple identifier or 3-tuple identifier of the service flow, the UPF network element triggers establishment of the first tunnel.

S1010: The UPF network element establishes the first tunnel with the application server AS.

For example, the first indication information indicates a tunnel endpoint identifier of the first tunnel on an application server side, for example, an IP address or a tunneling protocol on the application server side. In this case, the UPF network element and the application server AS establish the first tunnel based on the identifier indicated by the first indication information.

For an implementation process of S1010, refer to a related technology. Details are not described.

S1011: The UPF network element sends a second data packet to the application server AS. Correspondingly, the application server AS receives the second data packet from the UPF network element.

The second data packet includes a moment at which the UPF network element sends the second data packet. For example, the moment is carried in a first protocol layer of the second data packet. The first protocol layer is a protocol layer corresponding to the first tunnel.

S1012: The application server AS sends a first data packet to the UPF network element. Correspondingly, the UPF network element receives the first data packet from the application server AS.

First time information in the first data packet includes the following two items: the moment at which the UPF network element sends the second data packet and a moment at which the application server AS receives the second data packet.

Alternatively, first time information in the first data packet includes the following three items: the moment at which the UPF network element sends the second data packet, a moment at which the application server AS receives the second data packet, and a moment at which the application server AS sends the first data packet.

The first time information is carried in a first protocol layer of the first data packet.

S1013: The UPF network element determines a first transmission delay based on the first time information and a receiving moment of the first data packet.

For an implementation process of S1013, refer to the descriptions of S508. Details are not described again.

S1014: Optionally, the UPF network element sends the first transmission delay to the SMF network element. Correspondingly, the SMF network element receives the first transmission delay from the UPF network element.

Optionally, if the SMF network element adjusts a QoS parameter based on the first transmission delay, neither of the following S1015 and S1016 is performed.

S1015: Optionally, the SMF network element sends the first transmission delay to the PCF network element. Correspondingly, the PCF network element receives the first transmission delay from the SMF network element.

S1016: Optionally, the PCF network element adjusts the QoS parameter based on the first transmission delay.

For an implementation process of S1013, refer to the descriptions of S511. Details are not described again.

S1017: Optionally, the UPF network element sends the first transmission delay to the AF network element. Correspondingly, the AF network element receives the first transmission delay from the UPF network element. Specifically, the UPF network element exposes the first transmission delay to the AF network element by using an Nupf_EventExposure service or through the NEF network element.

S1018: Optionally, the PCF network element sends the first transmission delay to the AF network element. Correspondingly, the AF network element receives the first transmission delay from the PCF network element.

For an implementation process of S1014 to S1018, refer to the descriptions of S911 to S915. Details are not described again.

A communication method in embodiments of this application includes: A first core network device receives a first data packet from an application server, where the first data packet includes second time information. The first core network device determines a second transmission delay based on the second time information, where the second transmission delay is a transmission delay between a terminal device and the application server. The first core network device sends the second transmission delay to a second core network device, where the second transmission delay is used to determine a transmission delay between the first core network device and the application server.

In other words, after receiving the first data packet from the application server, the first core network device may determine the second transmission delay based on the second time information carried in the first data packet. In this way, the first core network device can obtain the transmission delay between the terminal device and the application server. When the first core network device provides the second transmission delay for another core network device (for example, the second core network device), the other core network device may determine the transmission delay between the first core network device and the application server based on the second transmission delay, and then adjust a QoS parameter based on the transmission delay (that is, the transmission delay between the first core network device and the application server) and a transmission delay between the terminal device and the first core network device, for example, adjust a parameter such as a data packet delay budget (packet delay budget, PDB) or a data packet set delay budget (PDU set delay budget, PSDB). In other words, based on the communication method in this application, in an end-to-end QoS guarantee process, not only the transmission delay between the terminal device and the first core network device may be referenced, but also the transmission delay between the first core network device and the application server may be referenced, to perform end-to-end service assurance and improve end-to-end service experience.

It should be understood that names of messages between devices, names of parameters in the messages, or the like in the following embodiments of this application are merely examples, and there may be other names in a specific implementation. This is not specifically limited in embodiments of this application. This applies throughout, and is not repeated below.

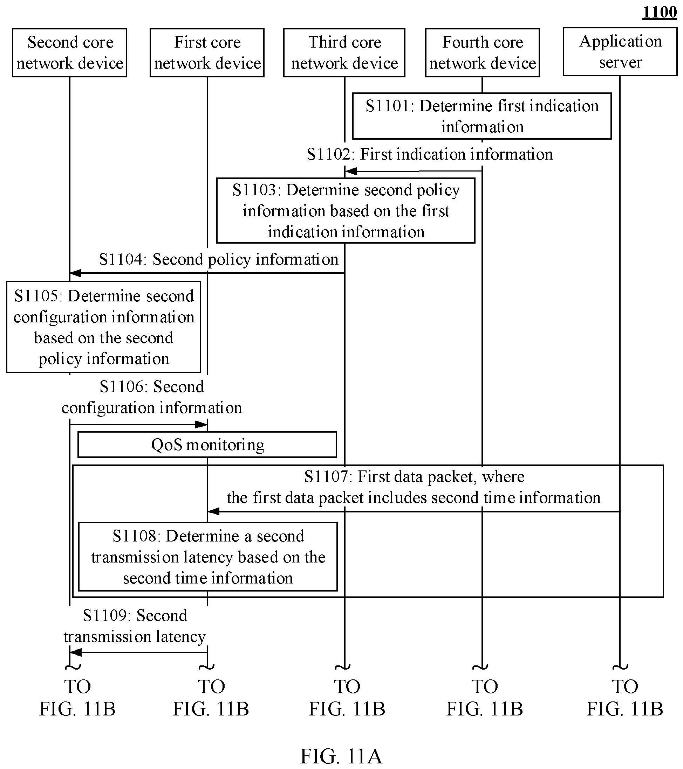

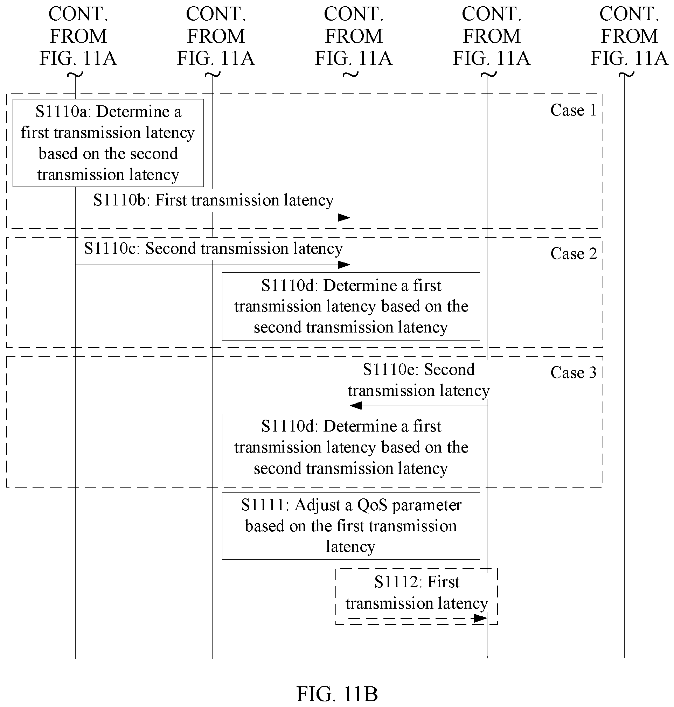

With reference to FIG. 11A and FIG. 11B, the following describes in detail the communication method provided in embodiments of this application. A communication method 1100 provided in an embodiment of this application includes the following operations.

S1101: Optionally, a fourth core network device determines first indication information.

For the fourth core network device and the first indication information, refer to the descriptions of S501. Details are not described again.

It should be noted that S1101 is an optional step. For example, when the fourth core network device triggers determining of a first transmission delay, the fourth core network device performs S1101. For another example, when a core network device other than the fourth core network device triggers determining of a first transmission delay, the fourth core network device does not perform S1101.

For the fourth core network device, the fourth core network device performs S1102 after determining the first indication information.

S1102: Optionally, the fourth core network device sends the first indication information to a third core network device. Correspondingly, the third core network device receives the first indication information from the fourth core network device.

For the third core network device, refer to the descriptions of S502. Details are not described again.

It should be noted that S1102 is an optional step. For example, the first indication information may be preconfigured on a third core network device side. In this case, S1102 is not performed. The preconfiguration is autonomous configuration by an operator or configuration based on negotiation between an operator and a third-party application.

S1103: Optionally, the third core network device determines second policy information based on the first indication information.

The second policy information is described as follows:
The second policy information indicates to determine a third transmission delay.

Optionally, the second policy information further indicates to determine a second transmission delay or indicates a second transmission delay. For example, the fourth core network device may provide the second transmission delay in the first indication information. For another example, if the fourth core network device does not provide the second transmission delay, the second policy information indicates to determine the second transmission delay.

For example, the second policy information includes an end-to-end delay measurement policy and a QoS measurement policy. The end-to-end delay measurement policy indicates to determine the second transmission delay, and the QoS measurement policy indicates to determine the third transmission delay.

In this application, the second transmission delay is a transmission delay between a terminal device and an application server, and may be denoted as an E2E delay. The second transmission delay may be provided by the fourth core network device by using the first indication information. In this case, none of steps S1105 to S1109 needs to be performed, that is, the second transmission delay does not need to be determined, but the fourth core network device directly provides the second transmission delay.

Optionally, the second transmission delay may be denoted as an E2E UL delay, namely, an end-to-end uplink delay, that is, an uplink transmission delay from the terminal device to the application server. Alternatively, the second transmission delay may be denoted as an E2E DL delay, namely, an end-to-end downlink delay, that is, a downlink transmission delay from the application server to the terminal device.

In this application, the third transmission delay is a transmission delay between the terminal device and a first core network device. In this case, the third core network device triggers QoS monitoring based on the first indication information, to measure the transmission delay between the terminal device and the first core network device.

The QoS monitoring may be denoted as UL QoS monitoring, namely, uplink QoS monitoring. In this case, the third transmission delay obtained based on the UL QoS monitoring may be understood as an uplink transmission delay from the terminal device to the first core network device.

The QoS monitoring may be denoted as DL QoS monitoring, namely, downlink QoS monitoring. In this case, the third transmission delay obtained based on the DL QoS monitoring may be understood as a downlink transmission delay from the first core network device to the terminal device.

Optionally, the third transmission delay is obtained by using an existing QoS measurement mechanism.

Optionally, the second policy information further indicates at least one of the following items.

A first item is a measurement mode of the second transmission delay.

For example, the measurement mode indicated by the second policy information is: determining the second transmission delay based on an RTP extension header. It may be understood that the second transmission delay is determined by using second time information carried in an RTP extension header of a downlink data packet (for example, the following first data packet). For details, refer to the descriptions of S1107 and S1108. Details are not described temporarily.

A second item is a measurement period of the second transmission delay. For example, the measurement period is 10 ms.

A third item is a measurement trigger condition of the second transmission delay.

A fourth item is a sending period or a reporting period of the second transmission delay. For example, the measurement period is 10 ms.

A fifth item is a sending trigger condition of the second transmission delay. For example, if a variation of the second transmission delay exceeds a specific threshold, reporting of the second transmission delay is triggered.

For example, the second policy information is included in a PCC rule.

It should be noted that S1103 is an optional step. For example, the second policy information is preconfigured on the third core network device side. In this case, S1103 is not performed. The preconfiguration is autonomous configuration by an operator or configuration based on negotiation between an operator and a third-party application.

For the third core network device, the third core network device performs S1104 after determining the second policy information.

S1104: Optionally, the third core network device sends the second policy information to a second core network device. Correspondingly, the second core network device receives the second policy information from the third core network device.

For the second core network device, refer to the descriptions of S504. Details are not described again.

It should be noted that S1104 is an optional step. For example, the second policy information is preconfigured on a second core network device side. In this case, S1104 is not performed. The preconfiguration is autonomous configuration by an operator or configuration based on negotiation between an operator and a third-party application.

S1105: Optionally, the second core network device determines second configuration information based on the second policy information.

The second configuration information is described as follows:
The second configuration information indicates to determine the second transmission delay.

Optionally, the second configuration information further indicates at least one of the following: the measurement mode of the second transmission delay, the measurement period of the second transmission delay, the measurement trigger condition of the second transmission delay, the sending period of the second transmission delay, or the sending trigger condition of the second transmission delay. For details, refer to the descriptions of S1103. Details are not described again.

It should be noted that S1105 is an optional step. For example, the second configuration information may be preconfigured on the second core network device side. In this case, S1105 is not performed. The preconfiguration is autonomous configuration by an operator or configuration based on negotiation between an operator and a third-party application.

It should be supplemented that, in this application, the second configuration information further indicates a related configuration such as a measurement period or a reporting period of the third transmission delay. The related configuration of the third transmission delay may be sent to a RAN device and the first core network device through the second core network device. Then, the first core network device triggers determining of the third transmission delay.

A process of determining the third transmission delay is as follows:
Step 1: The first core network device sends a downlink data packet X to the RAN device. Correspondingly, the RAN device receives the downlink data packet X from the first core network device. The downlink data packet X includes a timestamp T_{X-1} at which the first core network device sends the downlink data packet X.
Step 2: The RAN device determines a fourth transmission delay. The fourth transmission delay is a transmission delay between the terminal device and the RAN device, and may also be referred to as a transmission delay of a Uu interface. For a process of determining the fourth transmission delay, refer to a related technology. Details are not described.
Step 3: The RAN device sends an uplink data packet Y to the first core network device. Correspondingly, the first core network device receives the uplink data packet Y from the RAN device.

The uplink data packet Y includes the following three pieces of information: the fourth transmission delay, a timestamp T_{X-2} at which the RAN device receives the downlink data packet X, and a timestamp T_{Y-1} at which the RAN device sends the uplink data packet Y.

Step 4: The first core network device determines a moment T_{Y-2} at which the uplink data packet Y is received.

Step 5: The first core network device determines the third transmission delay.

For example, a transmission delay between the RAN device and the first core network device is T_{RAN-UPF} = T_{Y-2} - T_{Y-1}. T_{RAN-UPF} represents the transmission delay between the RAN device and the first core network device. T_{Y-2} represents the moment at which the first core network device receives the uplink data packet Y. T_{Y-1} represents the moment at which the RAN device sends the uplink data packet Y.

Alternatively, a transmission delay between the RAN device and the first core network device is T_{RAN-UPF} = T_{X-2} - T_{X-1}. T_{RAN-UPF} represents the transmission delay between the RAN device and the first core network device. T_{X-1} represents the moment at which the first core network device sends the downlink data packet X. T_{X-2} represents the moment at which the RAN device receives the downlink data packet X.

Alternatively, a transmission delay between the RAN device and the first core network device is T_{RAN-UPF} = (T_{Y-2} - T_{Y-1} + T_{X-2} - T_{X-1})/2.

The first core network device determines the third transmission delay based on the fourth transmission delay and the transmission delay between the RAN device and the first core network device.

For a process of determining the third transmission delay, refer to a related technology. Details are not described. For the second core network device, the second core network device performs S1106 after determining the second configuration information.

S1106: The second core network device sends the second configuration information to the first core network device. Correspondingly, the first core network device receives the second configuration information from the second core network device.

For the second configuration information, refer to the descriptions of S1105. Details are not described again.

For the first core network device, refer to the descriptions of S506. Details are not described again.

For the first core network device, the first core network device determines the second transmission delay based on the second configuration information. Specifically, the communication method 1100 in this embodiment of this application further includes the following steps.

S1107: The application server sends the first data packet to the first core network device. Correspondingly, the first core network device receives the first data packet from the application server.

The first data packet includes second time information.

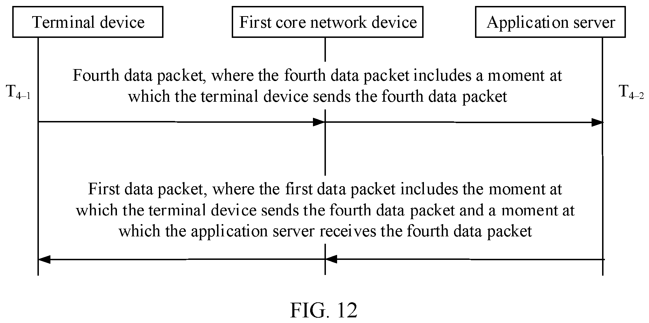

The second time information is described as follows:
Before S1107, as shown in FIG. 12, the communication method in this application further includes the following step d and step e.

Step d: The terminal device sends a fourth data packet to the first core network device. Correspondingly, the first core network device receives the fourth data packet from the terminal device.

The fourth data packet includes a moment at which the terminal device sends the fourth data packet.

Step e: The first core network device sends the fourth data packet to the application server. Correspondingly, the application server receives the fourth data packet from the first core network device.

In other words, for the application server, the application server first receives the fourth data packet from the first core network device, and then sends the first data packet, that is, first performs step e, and then performs S1107. In this case, the second time information in the first data packet includes the following two pieces of information: the moment (for example, denoted as T₄₋₁) at which the terminal device sends the fourth data packet and a moment (for example, denoted as T₄₋₂) at which the application server receives the fourth data packet.

It should be noted that a relationship between the first data packet and the fourth data packet is described as follows:
In terms of a time sequence, the application server first receives the fourth data packet, and then sends the first data packet. In this way, for the application server, the second time information (for example, T₄₋₁ and T₄₋₂) may be carried in the first data packet, so that the first core network device determines the second transmission delay based on the second time information.

In addition, the first data packet may be a service data packet, for example, a service data packet sent by the application server to the terminal device through the first core network device. The fourth data packet may also be a service data packet, for example, a service data packet sent by the terminal device to the application server through the first core network device. The first data packet and the fourth data packet may be data packets of a same service.

It should be supplemented that, in a possible example, the fourth data packet further includes indication information Z. The indication information Z indicates to use the first data packet to carry the following two pieces of information: the moment (for example, denoted as T₄₋₁) at which the terminal device sends the fourth data packet and the moment (for example, denoted as T₄₋₂) at which the application server receives the fourth data packet. In this case, after the application server receives the fourth data packet, in response to the indication information Z, the application server adds the foregoing two pieces of time information (namely, T₄₋₁ and T₄₋₂) to the first data packet. In this way, the first data packet sent by the application server carries the foregoing two pieces of time information (namely, T₄₋₁ and T₄₋₂).

Optionally, the second time information is carried in the following location.

The second time information is carried in an RTP header of the first data packet. Alternatively, the second time information is carried in an RTCP SR field of the first data packet. Alternatively, the second time information is carried in an RTP extension header of the first data packet. For details, refer to the descriptions in FIG. 8. Details are not described again.

For the first core network device, the first core network device performs S1108 after receiving the first data packet.

S1108: The first core network device determines the second transmission delay based on the second time information.

The second transmission delay is a transmission delay between the terminal device and the application server. For details, refer to the descriptions of S1103. Details are not described again.

For example, an implementation process of S1108 includes the following.

The second time information includes the following two pieces of information: the moment (for example, denoted as T₄₋₁) at which the terminal device sends the fourth data packet and the moment (for example, denoted as T₄₋₂) at which the application server receives the fourth data packet.

In this case, S1108 includes: The first core network device determines the second transmission delay or an uplink end-to-end transmission delay based on the moment (for example, denoted as T₄₋₁) at which the terminal device sends the fourth data packet and the moment (for example, denoted as T₄₋₂) at which the application server receives the fourth data packet.

For example, the second transmission delay is T₁ = T₄₋₂ - T₄₋₁. T₁ represents the second transmission delay. T₄₋₁ represents the moment at which the terminal device sends the fourth data packet. T₄₋₂ represents the moment at which the application server receives the fourth data packet.

It should be understood that in this application, the first core network device may determine the second transmission delay with reference to time information carried in a plurality of data packets. For example, the first core network device performs a first measurement, that is, determines one transmission delay based on time information carried in one first data packet. Then, the first core network device performs a second measurement, that is, determines a second measured transmission delay based on time information carried in a second first data packet. According to this cycle, measurement is repeated N times. Then, an average value (or a minimum value or a maximum value) of transmission latencies determined in N measurements is used as the second transmission delay. This is not limited in this application.

For the first core network device, the first core network device performs S1109 after determining the second transmission delay.

S1109: Optionally, the first core network device sends the second transmission delay to the second core network device. Correspondingly, the second core network device receives the second transmission delay from the first core network device.

For the second transmission delay, refer to the descriptions of S1108. Details are not described again.

For example, when the second configuration information indicates the sending period of the second transmission delay, the first core network device sends the second transmission delay to the second core network device based on the sending period indicated by the second configuration information.

For another example, the second configuration information indicates the sending trigger condition of the second transmission delay. For example, the sending trigger condition is that transmission delay reporting is performed when a transmission delay is greater than (or equal to) a second threshold. In this case, if the second transmission delay is greater than (or equal to) the second threshold, the first core network device sends the second transmission delay to the second core network device. On the contrary, if the second transmission delay is less than the second threshold, the first core network device does not send the second transmission delay.

It should be noted that S1109 is an optional step. In S1109, the first core network device provides the second transmission delay for the second core network device. When S1109 is not performed, in a possible implementation, the second core network device may alternatively obtain the second transmission delay from the fourth core network device. The fourth core network device may be an application function network element, for example, an AF network element. In another possible implementation, the second core network device may alternatively obtain the second transmission delay from a fifth core network device. The fifth core network device may be a network data analytics function network element, for example, an NWDAF network element. In other words, in this application, for the second core network device, the second core network device may obtain the second transmission delay from the first core network device, the fourth core network device, or the fifth core network device.

For the second core network device, after the second core network device receives the second transmission delay, in a possible implementation, the second core network device may perform S1110a and S1110b, as shown in a dashed-line box in which 'Case 1' is located. Alternatively, in another possible implementation, the second core network device may perform S1110c, and the third core network device may perform S1110d, as shown in a dashed-line box in which 'Case 2' is located. S1110a to S1110c are described as follows:

S1110a: The second core network device determines the first transmission delay based on the second transmission delay.

The first transmission delay is a transmission delay between the first core network device and the application server.

For example, the second core network device determines the first transmission delay based on the second transmission delay and the third transmission delay. The third transmission delay is a transmission delay between the terminal device and the first core network device, and may be obtained through QoS monitoring. For details, refer to a related technology. Details are not described.

For example, the first transmission delay is T = T₁ - T₂. T represents the first transmission delay, T₁ represents the second transmission delay, and T₂ represents the third transmission delay.

Optionally, if the second core network device adjusts a QoS parameter based on the first transmission delay, the following S1111 is not performed.

Optionally, the second core network device performs selection, re-discovery, or the like of an edge application server based on the first transmission delay.

S1110b: The second core network device sends the first transmission delay to the third core network device. Correspondingly, the third core network device receives the first transmission delay from the second core network device.

S1110c: The second core network device sends the second transmission delay to the third core network device. Correspondingly, the third core network device receives the second transmission delay from the second core network device.

For the third core network device, after the third core network device receives the second transmission delay, in a possible implementation, the third core network device may perform S1110d. S1110d is described as follows:
S1110d: The third core network device determines the first transmission delay based on the second transmission delay.

For an implementation process of S1110d, refer to the descriptions of S1110a. Details are not described again.

Alternatively, in another possible implementation, as shown in a dashed-line box in which "Case 3" is located, this application further includes the following operations.

S1110e: The fourth core network device sends the second transmission delay to the third core network device. Correspondingly, the third core network device receives the second transmission delay from the fourth core network device. The fourth core network device may be an application function network element, or may be a network data analytics function network element.

S1110d: The third core network device determines the first transmission delay based on the second transmission delay.

For the third core network device, the third core network device obtains the first transmission delay by using S1110b or S1110d, and then performs S1111.

S1111: Optionally, the third core network device adjusts the QoS parameter based on the first transmission delay.

For an implementation process of S1111, refer to the descriptions of S511. Details are not described again.

Optionally, in some embodiments, if the first indication information indicates to feed back the first transmission delay, the communication method in this application further includes the following step.

For example, for the third core network device, the third core network device performs S1112 after performing S1110b or S1110d.

S1112: Optionally, the third core network device sends the first transmission delay to the fourth core network device. Correspondingly, the fourth core network device receives the first transmission delay from the third core network device.

In other words, the third core network device feeds back the first transmission delay to the fourth core network device, to implement network information exposure.

Optionally, the fourth core network device triggers re-discovery of an edge application server or migration of an edge application server based on the first transmission delay. For example, if the current first transmission delay is excessively long (that is, an N6 delay is excessively long), it means that quality of a link between the current application server and the UPF network element is relatively poor, and the fourth core network device may trigger to select a new edge application server or migrate to a new edge application server.

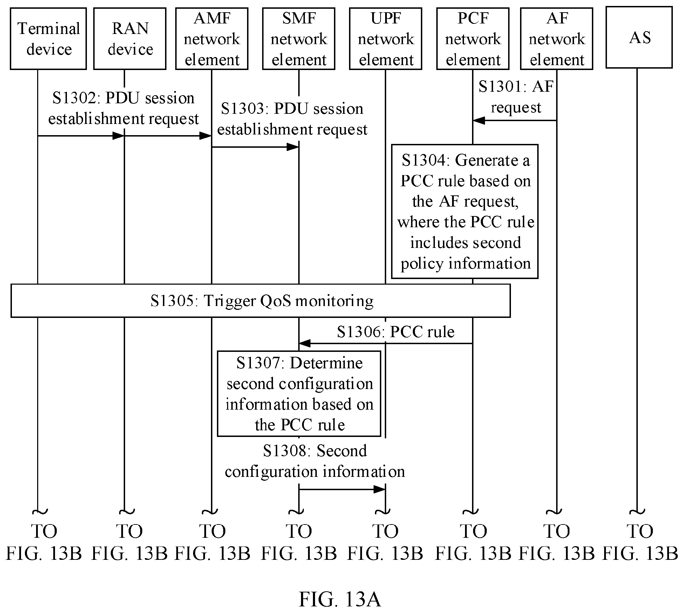

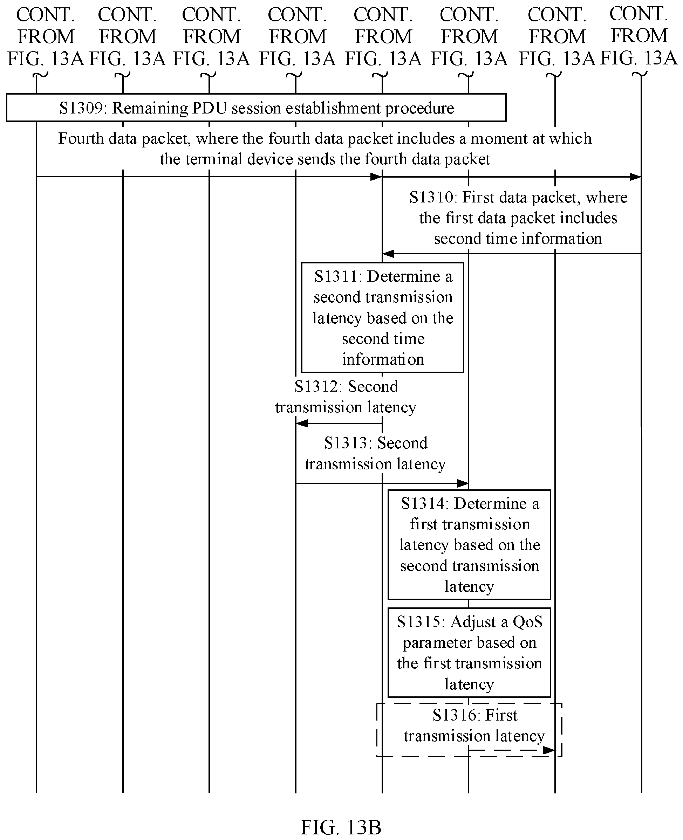

With reference to an example shown in FIG. 13A and FIG. 13B, the following describes in detail a specific implementation of the communication method shown in FIG. 11A and FIG. 11B.

FIG. 13A and FIG. 13B are a schematic flowchart of a communication method according to an embodiment of this application. The first core network device in FIG. 11A and FIG. 11B may be a UPF network element shown in FIG. 13A and FIG. 13B, the second core network device in FIG. 11A and FIG. 11B may be an SMF network element shown in FIG. 13A and FIG. 13B, the third core network device in FIG. 11A and FIG. 11B may be a PCF network element shown in FIG. 13A and FIG. 13B, the fourth core network device in FIG. 11A and FIG. 11B may be an AF network element shown in FIG. 13A and FIG. 13B, and the application server in FIG. 11A and FIG. 11B may be an AS shown in FIG. 13A and FIG. 13B.

Specifically, in FIG. 13A and FIG. 13B, the communication method in this embodiment of this application includes the following steps.

S1301: Optionally, the AF network element sends an AF request to the PCF network element. Correspondingly, the PCF network element receives the AF request from the AF network element.

The AF request includes service flow description information (for example, an SDF) and first indication information.

For the service flow description information, refer to the descriptions of S901. Details are not described again.

For the first indication information, refer to the descriptions of S1101. Details are not described again.

S1302: Optionally, when a terminal device initiates a PDU session establishment procedure, the terminal device sends a PDU session establishment request (PDU session Establishment Request) to an AMF network element. Correspondingly, the AMF network element receives the PDU session establishment request from the terminal device.

The PDU session establishment request is used to request to establish a PDU session.

S1303: Optionally, the AMF network element sends a PDU session establishment request to the SMF network element. Correspondingly, the SMF network element receives the PDU session establishment request from the AMF network element.

S1304: Optionally, the PCF network element generates a PCC rule based on the AF request.

Optionally, the PCF network element generates the PCC rule based on the AF request and/or a local configuration.

The PCC rule includes second policy information. For the second policy information, refer to the descriptions of S1103. Details are not described again.

For an implementation process of S1301 to S1304, refer to the descriptions of S901 to S904. Details are not described again.

S1305: The PCF network element triggers QoS monitoring.

For example, the PCF network element triggers QoS monitoring based on the first indication information. For a QoS monitoring process, refer to a related technology. Details are not described.

S1306: Optionally, the PCF network element sends the PCC rule to the SMF network element. Correspondingly, the SMF network element receives the PCC rule from the PCF network element.

For the SMF network element, the SMF network element performs S1307 after obtaining the PCC rule.

S1307: Optionally, the SMF network element determines second configuration information based on the PCC rule.

For the second configuration information, refer to the descriptions of S1105. Details are not described again.

S1308: Optionally, the SMF network element sends the second configuration information to the UPF network element. Correspondingly, the UPF network element receives the second configuration information from the SMF network element.

For the terminal device, the AMF network element, the SMF network element, and the UPF network element, S1308 is further performed.

S1309: Optionally, when the PDU session establishment procedure is performed, the terminal device, the AMF network element, the SMF network element, and the UPF network element perform a remaining PDU session establishment (remaining steps for PDU session Establishment) procedure.

For an implementation process of S1306 to S1309, refer to the descriptions of S905 to S907. Details are not described again.

After the PDU session establishment/modification procedure is completed, the terminal device sends a fourth data packet to the application server AS. Correspondingly, the application server AS receives the fourth data packet from the terminal device. The fourth data packet includes a moment at which the terminal device sends the fourth data packet.

For the application server AS, the application server AS performs S1310 after receiving the fourth data packet.

S1310: The application server AS sends a first data packet to the UPF network element. Correspondingly, the UPF network element receives the first data packet from the application server AS.

The first data packet includes second time information, and the second time information includes the following two items: the moment at which the terminal device sends the fourth data packet and a moment at which the application server AS receives the fourth data packet. For the second time information, refer to the descriptions of S1107. Details are not described again.

S1311: The UPF network element determines a second transmission delay based on the second time information.

For an implementation process of S1311, refer to the descriptions of S1108. Details are not described again.

S1312: Optionally, the UPF network element sends the second transmission delay to the SMF network element. Correspondingly, the SMF network element receives the second transmission delay from the UPF network element.

For example, the UPF network element sends the second transmission delay to the SMF network element based on the second configuration information, or the UPF network element sends the second transmission delay to the SMF network element based on the second configuration information and a local configuration. For details, refer to the descriptions of S1109. Details are not described again.

For another example, the UPF network element sends the second transmission delay to the SMF network element by using an N4 session message.

S1313: Optionally, the SMF network element sends the second transmission delay to the PCF network element. Correspondingly, the PCF network element receives the second transmission delay from the SMF network element.

For an implementation process of S1313, refer to the descriptions of S510. Details are not described again.

S1314: Optionally, the PCF network element determines a first transmission delay based on the second transmission delay.

For an implementation process of S1314, refer to the descriptions of S1110d. Details are not described again.

S1315: Optionally, the PCF network element adjusts a QoS parameter based on the first transmission delay.

For an implementation process of S1315, refer to the descriptions of S511. Details are not described again.

S1316: Optionally, the PCF network element sends the first transmission delay to the AF network element. Correspondingly, the AF network element receives the first transmission delay from the PCF network element.

A communication method in embodiments of this application includes: A fifth core network device receives a subscription request from a third core network device, where the subscription request is used to request an estimated value of a first transmission delay, and the estimated value of the first transmission delay indicates an estimated transmission delay between a first core network device and an application server. The fifth core network device obtains a historical measured value of the first transmission delay, where the historical measured value of the first transmission delay indicates a transmission delay between the first core network device and the application server in a historical time period. The fifth core network device determines the estimated value of the first transmission delay based on the historical measured value of the first transmission delay. The fifth core network device sends the estimated value of the first transmission delay to the third core network device.

In other words, the fifth core network device may perform data analysis based on the historical measured value of the first transmission delay in response to the subscription request, to obtain the estimated transmission delay between the first core network device and the application server, that is, the estimated value of the first transmission delay.

When the fifth core network device provides the estimated value of the first transmission delay for another core network device, for example, the third core network device, the third core network device adjusts a quality of service (QoS) parameter based on the estimated value of the first transmission delay, for example, adjusts a parameter such as a PDB or a PSDB, to implement end-to-end QoS control. In other words, based on the communication method in this application, in an end-to-end QoS guarantee process, the estimated value of the transmission delay between the first core network device and the application server may be referenced, to perform end-to-end service assurance and improve end-to-end service experience.

It should be understood that names of messages between devices, names of parameters in the messages, or the like in the following embodiments of this application are merely examples, and there may be other names in a specific implementation. This is not specifically limited in embodiments of this application. This applies throughout, and is not repeated below.

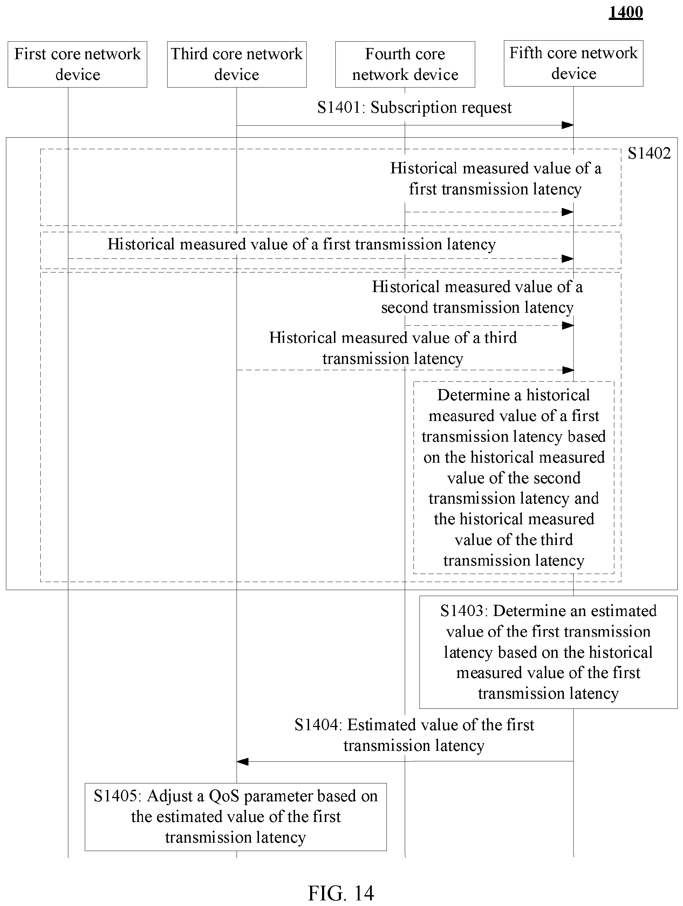

With reference to FIG. 14, the following describes in detail the communication method provided in embodiments of this application. A communication method 1400 provided in an embodiment of this application includes the following operations.

S1401: Optionally, a third core network device sends a subscription request to a fifth core network device. Correspondingly, the fifth core network device receives the subscription request from the third core network device.

The third core network device may be a policy control function network element. Using a 5G communication system as an example, the third core network device is a PCF network element. Alternatively, the third core network device may be a session management function network element. Using a 5G communication system as an example, the third core network device is an SMF network element. An example in which the third core network device is a PCF network element is used below for description, but should not be construed as a limitation on this application.

The fifth core network device may be a network data analytics function network element. Using a 5G communication system as an example, the fifth core network device is an NWDAF network element.

The subscription request is used to request an estimated value of a first transmission delay.

In this application, the first transmission delay is a transmission delay between a first core network device and an application server. The estimated value of the first transmission delay is an estimated transmission delay between the first core network device and the application server. This may be understood as an estimated transmission delay between the first core network device and the application server for a current moment or a future time period.

Optionally, the subscription request further includes at least one of the following items.

A first item is an identifier of a first terminal device. The first terminal device is a terminal device that performs data transmission with the application server through the first core network device. In this case, the subscription request is used to request a first transmission delay for the first terminal device. It may be understood that, an analysis target of the fifth core network device in a delay analysis process is the first terminal device.

A second item is an identifier of a first terminal device group. Each terminal device in the first terminal device group performs data transmission with the application server through the first core network device. In this case, the subscription request is used to request a first transmission delay for the first terminal device group. It may be understood that, an analysis target of the fifth core network device in a delay analysis process is the first terminal device group.

A third item is an identifier of a first service. The first transmission delay is a transmission delay of the first service between the first core network device and the application server. In this case, the subscription request is used to request the first transmission delay for the first service. It may be understood that an analysis granularity of the fifth core network device in a delay analysis process is the first transmission delay of the first service on the first core network device.

In other words, the fifth core network device introduces an N6 delay (N6 delay) prediction event. When S1401 is performed, another network element (for example, the third core network device) may subscribe to the N6 delay event from the fifth core network device by using a subscription request, to perform end-to-end service assurance. Alternatively, when S1401 is not performed, a third party may subscribe to the N6 delay event from the fifth core network device by using a subscription request, to perform end-to-end service assurance.

For the fifth core network device, the fifth core network device performs the following operation in response to the subscription request.

S1402: The fifth core network device obtains a historical measured value of the first transmission delay based on the subscription request.

The first transmission delay is a transmission delay between the first core network device and the application server.

The historical measured value of the first transmission delay is a transmission delay between the first core network device and the application server in a historical time period. The historical time period is any time period earlier than the current moment.

The first core network device may be a UPF network element. For details, refer to the descriptions in FIG. 5. Details are not described again.

In a first possible implementation, an implementation process of S1402 includes the following.

The fifth core network device obtains the historical measured value of the first transmission delay from a fourth core network device. The fourth core network device may be an AF network element. For details, refer to the descriptions in FIG. 5. Details are not described again.

Alternatively, the fifth core network device obtains the historical measured value of the first transmission delay from the first core network device. The first core network device may be a UPF network element. For details, refer to the descriptions in FIG. 5. Details are not described again.

In a second possible implementation, an implementation process of S1402 includes the following.

First, the fifth core network device obtains a historical measured value of a second transmission delay and a historical measured value of a third transmission delay.

The second transmission delay is a transmission delay between a terminal device and the application server. The historical measured value of the second transmission delay is a transmission delay between the terminal device and the application server that is measured in the historical time period. For example, the fifth core network device obtains the historical measured value of the second transmission delay from a fourth core network device (for example, an AF network element).

The third transmission delay is a transmission delay between the terminal device and the first core network device. The historical measured value of the third transmission delay is a transmission delay between the terminal device and the first core network device that is measured in the historical time period. For example, the fifth core network device obtains the historical measured value of the third transmission delay from the third core network device (for example, a PCF network element).

Then, the fifth core network device determines the historical measured value of the first transmission delay based on the historical measured value of the second transmission delay and the historical measured value of the third transmission delay.

For example, the first transmission delay is T = T₁ - T₂. T represents the historical measured value of the first transmission delay, T₁ represents the historical measured value of the second transmission delay, and T₂ represents the historical measured value of the third transmission delay.

In a third possible implementation, an implementation process of S1402 includes the following.

For example, the fifth core network device sends first indication information to the third core network device. Correspondingly, the third core network device receives the first indication information from the fifth core network device. The first indication information indicates to determine the first transmission delay. Then, the third core network device generates first policy information based on the first indication information. The third core network device sends the first policy information to a second core network device. The second core network device generates first configuration information based on the first policy information. The second core network device sends the first configuration information to the first core network device. For the first core network device, for obtaining, by the first core network device, the historical measured value of the first transmission delay, refer to the descriptions of S501 to S508. After the first core network device obtains the historical measured value of the first transmission delay, the first core network device sends the historical measured value of the first transmission delay to the fifth core network device.

Alternatively, the fifth core network device generates first configuration information. The fifth core network device sends the first configuration information to the first core network device. For the first core network device, for obtaining, by the first core network device, the historical measured value of the first transmission delay, refer to the descriptions of S506 to S508. After the first core network device obtains the historical measured value of the first transmission delay, the first core network device sends the historical measured value of the first transmission delay to the fifth core network device.

For the fifth core network device, the fifth core network device performs S1403 after obtaining the historical measured value of the first transmission delay.

S1403: The fifth core network device determines the estimated value of the first transmission delay based on the historical measured value of the first transmission delay.

For the historical measured value of the first transmission delay, refer to the descriptions of S1402. Details are not described again.

For the estimated value of the first transmission delay, refer to the descriptions of S1401. Details are not described again.

For example, the fifth core network device performs analysis processing on the historical measured value of the first transmission delay, to obtain the estimated value of the first transmission delay. For the fifth core network device, the fifth core network device performs S1404 after obtaining the estimated value of the first transmission delay.

S1404: The fifth core network device sends the estimated value of the first transmission delay to the third core network device. Correspondingly, the third core network device receives the estimated value of the first transmission delay from the fifth core network device.

For example, the fifth core network device sends the estimated value of the first transmission delay to the third core network device based on the subscription request.

For example, when the subscription request further includes the identifier of the first terminal device, the fifth core network device sends the estimated value of the first transmission delay to the third core network device, where the estimated value is an estimated value of the first transmission delay for the first terminal device.

For another example, when the subscription request further includes the identifier of the first terminal device group, the fifth core network device sends the estimated value of the first transmission delay to the third core network device, where the estimated value is an estimated value of the first transmission delay for the first terminal device group.

For another example, when the subscription request further includes the identifier of the first service, the fifth core network device sends the estimated value of the first transmission delay to the third core network device, where the estimated value is an estimated value of the first transmission delay for the first service.

For the third core network device, the third core network device performs S1405 after obtaining the first transmission delay.

S1405: The third core network device adjusts a QoS parameter based on the estimated value of the first transmission delay.

For an implementation process of S1405, refer to the descriptions of S511. Details are not described again.

It may be understood that, in the foregoing embodiments, the methods and/or steps implemented by the core network device (for example, any one of the first core network device to the fifth core network device) may be alternatively implemented by a component (for example, a processor, a chip, a chip system, a circuit, a logical module, or software) that may be used in the core network device. The chip system may include a chip, or the chip system may include a chip and another discrete component.

It may be understood that, to implement the foregoing functions, the communication apparatus includes a corresponding hardware structure and/or software module for performing the functions. A person skilled in the art should be easily aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner.

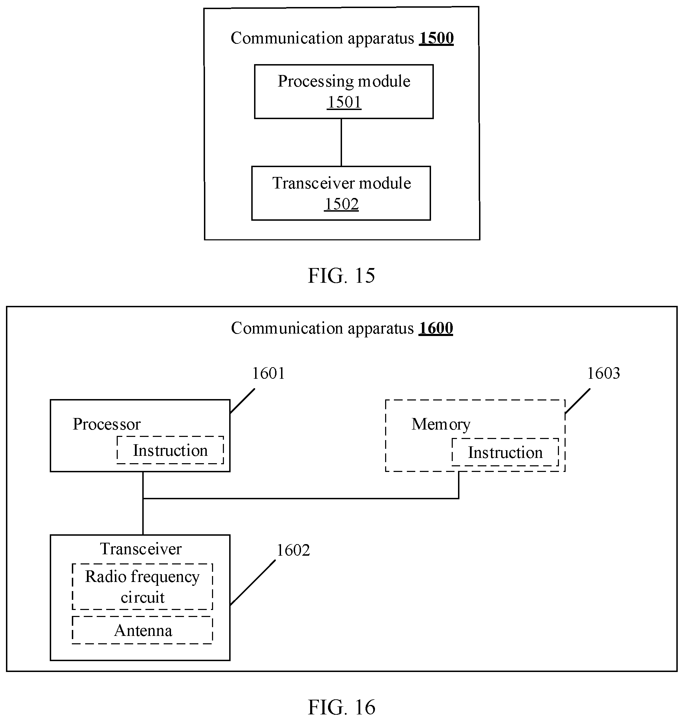

FIG. 15 is a diagram of a structure of a communication apparatus 1500. The communication apparatus 1500 includes a processing module 1501 and a transceiver module 1502. The communication apparatus 1500 may be configured to implement a function of the foregoing core network device (for example, any one of the first core network device to the fifth core network device).

In some embodiments, the communication apparatus 1500 may further include a storage module (not shown in FIG. 15), configured to store program instructions and data.

In some embodiments, the transceiver module 1502 may also be referred to as a transceiver unit, configured to implement a sending function and/or a receiving function. The transceiver module 1502 may include a transceiver circuit, a transceiver machine, a transceiver, or a communication interface.

In some embodiments, the transceiver module 1502 may include a receiving module and a sending module, respectively configured to perform receiving steps and sending steps performed by the core network device in the foregoing method embodiments, and/or configured to support other processes of the technologies described in this specification. The processing module 1501 may be configured to perform processing (for example, determining) steps performed by the core network device in the foregoing method embodiments, and/or configured to support other processes of the technologies described in this specification.

All related content of each step in the foregoing method embodiment may be cited to a function description of a corresponding functional module, and details are not described herein again.

Optionally, in this application, that the transceiver module receives/sends information may also be understood as that the processing module receives/sends the information via the transceiver module. That the processing module receives/sends the information via the transceiver module may also be understood as that the processing module controls the transceiver module to receive/send the information. Alternatively, that the processing module sends the information via the transceiver module may be understood as that the processing module outputs the information to the transceiver module, and the transceiver module sends the information; and that the processing module receives the information via the transceiver module may be understood as that the transceiver module receives the information and inputs the information to the processing module.

In this application, the communication apparatus 1500 may be presented in a form of obtaining each functional module through division in an integrated manner. The "module" herein may be an application-specific integrated circuit (application-specific integrated circuit, ASIC), a circuit, a processor that executes one or more software or firmware programs and a memory, an integrated logic circuit, and/or another component that can provide the foregoing functions.

In some embodiments, when the communication apparatus 1500 in FIG. 15 is a chip or a chip system, the functions/implementation processes of the transceiver module 1502 may be implemented by an input/output interface (or a communication interface) of the chip or the chip system, and the functions/implementation processes of the processing module 1501 may be implemented by a processor (or a processing circuit) of the chip or the chip system.

Because the communication apparatus 1500 provided in this embodiment may perform the foregoing method, for technical effects that can be achieved, refer to the foregoing method embodiments. Details are not described herein again.

In a possible product form, the core network device (for example, any one of the first core network device to the fifth core network device) in embodiments of this application may be alternatively implemented by using the following: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

In another possible product form, the core network device (for example, any one of the first core network device to the fifth core network device) in embodiments of this application may be implemented by using a general bus architecture. For ease of description, refer to FIG. 16. FIG. 16 is a diagram of a structure of a communication apparatus 1600 according to an embodiment of this application. The communication apparatus 1600 includes a processor 1601 and a transceiver 1602. The communication apparatus 1600 may be a core network device (for example, any one of the first core network device to the fifth core network device), or a chip or a module in the core network device. FIG. 16 shows only main components of the communication apparatus 1600. In addition to the processor 1601 and the transceiver 1602, the communication apparatus 1600 may further include a memory 1603 and an input/output apparatus (not shown in the figure).

Optionally, the processor 1601 is mainly configured to process a communication protocol and communication data, control the entire communication apparatus, execute a software program, and process data of the software program. The memory 1603 is mainly configured to store the software program and data. The transceiver 1602 may include a radio frequency circuit and an antenna. The radio frequency circuit is mainly configured to: perform conversion between a baseband signal and a radio frequency signal, and process the radio frequency signal. The antenna is mainly configured to receive and send radio frequency signals in a form of electromagnetic waves. The input/output apparatus, such as a touchscreen, a display, or a keyboard, is mainly configured to: receive data input by a user and output data to the user.

Optionally, the processor 1601, the transceiver 1602, and the memory 1603 may be connected through a communication bus.

It should be noted that the memory 1603 may exist independently of the processor 1601, or may be integrated with the processor 1601. The memory 1603 may be located inside the communication apparatus 1600, or may be located outside the communication apparatus 1600. This is not limited.

After the communication apparatus is powered on, the processor 1601 may read the software program in the memory 1603, explain and execute instructions of the software program, and process data of the software program. When data needs to be sent in a wireless manner, after performing baseband processing on the to-be-sent data, the processor 1601 outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1601. The processor 1601 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 1500 may be in a form of the communication apparatus 1600 shown in FIG. 16.

In an example, functions/implementation processes of the processing module 1501 in FIG. 15 may be implemented by the processor 1601 in the communication apparatus 1600 shown in FIG. 16 by invoking the computer-executable instructions stored in the memory 1603. Functions/implementation processes of the transceiver module 1502 in FIG. 15 may be implemented by the transceiver 1602 in the communication apparatus 1600 shown in FIG. 16.

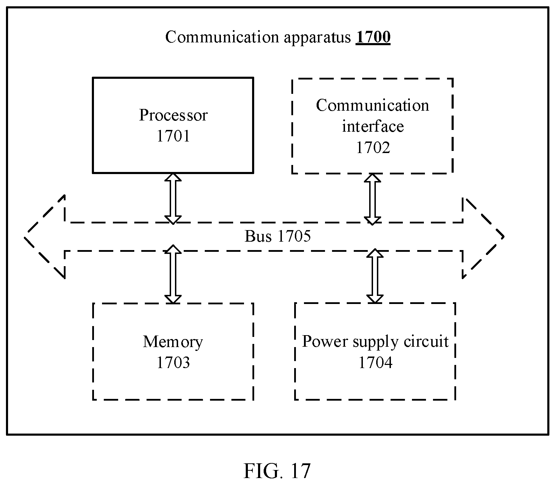

In another possible product form, the core network device (for example, any one of the first core network device to the fifth core network device) in this application may use a composition structure shown in FIG. 17, or include components shown in FIG. 17. FIG. 17 is a diagram of composition of a communication apparatus 1700 according to this application.

As shown in FIG. 17, the communication apparatus 1700 includes at least one processor 1701. Optionally, the communication apparatus further includes a communication interface 1702.

When related program instructions are executed in the at least one processor 1701, the apparatus 1700 may be enabled to implement the method provided in any one of the foregoing embodiments and any possible design of the method. Alternatively, the processor 1701 is configured to implement, by using a logic circuit or executing code instructions, the method provided in any one of the foregoing embodiments and any possible design of the method.

The communication interface 1702 may be configured to receive program instructions and transmit the program instructions to the processor. Alternatively, the communication interface 1702 may be configured to perform communication interaction between the communication apparatus 1700 and another communication device, for example, exchange control signaling and/or service data. For example, the communication interface 1702 may be configured to receive a signal from an apparatus other than the communication apparatus 1700, and transmit the signal to the processor 1701, or send a signal from the processor 1701 to a communication apparatus other than the communication apparatus 1700.

Optionally, the communication interface 1702 may be a code and/or data read/write interface circuit, or the communication interface 1702 may be a signal transmission interface circuit between a communication processor and a transceiver, or may be a pin of a chip.

Optionally, the communication apparatus 1700 may further include at least one memory 1703, and the memory 1703 may be configured to store the related program instructions and/or data that are/is required.

It should be noted that the memory 1703 may exist independently of the processor 1701, or may be integrated with the processor 1701. The memory 1703 may be located inside the communication apparatus 1700, or may be located outside the communication apparatus 1700. This is not limited.

Optionally, the communication apparatus 1700 may further include a power supply circuit 1704, and the power supply circuit 1704 may be configured to supply power to the processor 1701. The power supply circuit 1704 may be located in a same chip as the processor 1701, or may be located in a chip other than a chip in which the processor 1701 is located.

Optionally, the communication apparatus 1700 may further include a bus 1705, and parts of the communication apparatus 1700 may be interconnected through the bus 1705.

In some embodiments, in hardware implementation, a person skilled in the art may figure out that the communication apparatus 1500 shown in FIG. 15 may be in a form of the communication apparatus 1700 shown in FIG. 17.

In an example, functions/implementation processes of the processing module 1501 in FIG. 15 may be implemented by the processor 1701 in the communication apparatus 1700 shown in FIG. 17 by invoking the computer-executable instructions stored in the memory 1703. Functions/implementation processes of the transceiver module 1502 in FIG. 15 may be implemented by the communication interface 1702 in the communication apparatus 1700 shown in FIG. 17.

It should be noted that the structure shown in FIG. 17 does not constitute a specific limitation on the core network device (for example, any one of the first core network device to the fifth core network device). For example, in some other embodiments of this application, the core network device may include more or fewer components than those shown in the figure, or combine some components, or split some components, or have different component arrangements. The components shown in the figure may be implemented by hardware, software, or a combination of software and hardware.

Optionally, in this application, the processor may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

Optionally, in this application, the memory may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in embodiments of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and method described in this application may alternatively be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may be physically separated or not, this is, may be located in the same place or distributed on a plurality of network units. A component displayed as a unit may or may not be a physical unit. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

All or some of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprise" (comprising) does not exclude another component or step, and "a" or "one" does not exclude a meaning of plurality. A single processor or another unit may implement several functions enumerated in the claims. Some measures are recorded in dependent claims that are different from each other, but this does not indicate that these measures cannot be combined to produce a better effect.

## Claims

1. A communication method, comprising:
receiving, by a first core network device, a first data packet from an application server, wherein the first data packet comprises first time information;
determining, by the first core network device, a first transmission delay based on the first time information, wherein the first transmission delay is a transmission delay between the first core network device and the application server; and
sending, by the first core network device, the first transmission delay to a second core network device or a fourth core network device.

2. The method according to claim 1, wherein
the first transmission delay is used to adjust a quality of service (QoS) parameter, and the to-be-adjusted QoS parameter comprises at least one of the following:
a data packet delay budget between a terminal device and the first core network device; or
a data packet set delay budget between a terminal device and the first core network device.

3. The method according to claim 1 or 2, wherein
the first time information comprises a moment at which the application server sends the first data packet; and
determining, by the first core network device, the first transmission delay based on the first time information comprises:
determining, by the first core network device, the first transmission delay based on the following two moments:
the moment at which the application server sends the first data packet; and
a moment at which the first core network device receives the first data packet.

4. The method according to claim 1 or 2, wherein before receiving, by the first core network device, the first data packet from the application server, the method further comprises:
sending, by the first core network device, a second data packet to the application server, wherein the second data packet comprises a moment at which the first core network device sends the second data packet;
the first time information comprises the moment at which the first core network device sends the second data packet and a moment at which the application server receives the second data packet; and
determining, by the first core network device, the first transmission delay based on the first time information comprises:
determining, by the first core network device, the first transmission delay based on the following two moments:
the moment at which the first core network device sends the second data packet; and
the moment at which the application server receives the second data packet.

5. The method according to claim 1 or 2, wherein before receiving, by the first core network device, the first data packet from the application server, the method further comprises:
sending, by the first core network device, a second data packet to the application server, wherein the second data packet comprises a moment at which the first core network device sends the second data packet;
the first time information comprises the moment at which the first core network device sends the second data packet, a moment at which the application server receives the second data packet, and a moment at which the application server sends the first data packet; and
determining, by the first core network device, the first transmission delay based on the first time information comprises:
determining, by the first core network device, the first transmission delay based on the following four moments:
the moment at which the first core network device sends the second data packet;
the moment at which the application server receives the second data packet;
the moment at which the application server sends the first data packet; and
a moment at which the first core network device receives the first data packet.

6. The method according to claim 1 or 2, wherein before receiving, by the first core network device, the first data packet from the application server, the method further comprises:
receiving, by the first core network device, a third data packet from the terminal device, wherein the third data packet comprises a moment at which the terminal device sends the third data packet; and
sending, by the first core network device, the third data packet to the application server;
the first time information comprises the moment at which the terminal device sends the third data packet and a moment at which the application server receives the third data packet; and
determining, by the first core network device, the first transmission delay based on the first time information comprises:
when the first data packet and the third data packet comprise a same moment, and the same moment is the moment at which the terminal device sends the third data packet, determining, by the first core network device, the first transmission delay based on the following two moments:
a moment at which the first core network device sends the third data packet; and
the moment at which the application server receives the third data packet.

7. The method according to any one of claims 1 to 6, wherein
the first time information is carried in a real-time transport protocol (RTP) header or an RTP extension header of the first data packet; or
the first time information is carried in a real-time transport control protocol (RTCP) sender report (SR) field of the first data packet.

8. The method according to any one of claims 1 to 6, wherein
the first time information is carried in a first protocol layer of the first data packet; and the first protocol layer is a protocol layer for a tunnel between the first core network device and the application server.

9. The method according to any one of claims 1 to 8, wherein the method further comprises:
receiving, by the first core network device, first configuration information from the second core network device, wherein the first configuration information indicates to determine the first transmission delay.

10. The method according to claim 9, wherein
the first configuration information further indicates at least one of the following: a measurement mode of the first transmission delay, a measurement period of the first transmission delay, a measurement trigger condition of the first transmission delay, a sending period of the first transmission delay, or a sending trigger condition of the first transmission delay.

11. The method according to claim 9 or 10, wherein
the first configuration information further indicates an endpoint of a first tunnel and/or an establishment trigger condition of the first tunnel, and the first tunnel is a tunnel between the first core network device and the application server; and
the method further comprises: establishing, by the first core network device, the first tunnel based on the first configuration information, wherein the first tunnel is used to measure the first transmission delay.

12. The method according to any one of claims 1 to 11, wherein the second core network device comprises a session management function network element, and/or the fourth core network device comprises an application function network element.

13. A communication method, comprising:
receiving, by a third core network device, a first transmission delay from a second core network device, wherein the first transmission delay is a transmission delay between a first core network device and an application server; and
adjusting, by the third core network device, a quality of service (QoS) parameter based on the first transmission delay, and/or sending, by the third core network device, the first transmission delay to a fourth core network device, wherein
the QoS parameter comprises at least one of the following:
a data packet delay budget between a terminal device and the first core network device; or
a data packet set delay budget between a terminal device and the first core network device.

14. The method according to claim 13, wherein the method further comprises:
receiving, by the third core network device, first indication information from the fourth core network device, wherein the first indication information indicates to determine the first transmission delay;
determining, by the third core network device, first policy information based on the first indication information, wherein the first policy information indicates to determine the first transmission delay; and
sending, by the third core network device, the first policy information to the second core network device.

15. The method according to claim 14, wherein
the first policy information further indicates at least one of the following: a measurement mode of the first transmission delay, a measurement period of the first transmission delay, a measurement trigger condition of the first transmission delay, a sending period of the first transmission delay, or a sending trigger condition of the first transmission delay; and
the first transmission delay is determined by the first core network device.

16. The method according to claim 14 or 15, wherein
the first policy information further indicates an endpoint of a first tunnel and/or an establishment trigger condition of the first tunnel; and
the first tunnel is a tunnel between the first core network device and the application server, and the first tunnel is used to measure the first transmission delay.

17. The method according to any one of claims 14 to 16, wherein
the first indication information further indicates that the first transmission delay is used to adjust the QoS parameter; and
adjusting, by the third core network device, the QoS parameter based on the first transmission delay comprises:
adjusting, by the third core network device, the QoS parameter based on the first transmission delay in response to the first indication information.

18. The method according to any one of claims 14 to 16, wherein
the first indication information further indicates to feed back the first transmission delay; and
sending, by the third core network device, the first transmission delay to the fourth core network device comprises:
sending, by the third core network device, the first transmission delay to the fourth core network device in response to the first indication information.

19. A communication method, comprising:
determining, by a fourth core network device, first indication information, wherein the first indication information indicates to determine a first transmission delay, and the first transmission delay is a transmission delay between a first core network device and an application server; and
sending, by the fourth core network device, the first indication information to a third core network device.

20. The method according to claim 19, wherein
the first transmission delay is used to adjust a quality of service (QoS) parameter, and the to-be-adjusted QoS parameter comprises at least one of the following:
a data packet delay budget between a terminal device and the first core network device; or
a data packet set delay budget between a terminal device and the first core network device.

21. The method according to claim 20, wherein
the first indication information further indicates that the first transmission delay is used to adjust the QoS parameter.

22. The method according to any one of claims 19 to 21, wherein
the first indication information further indicates to feed back the first transmission delay; and
the method further comprises: receiving, by the fourth core network device, the first transmission delay from the first core network device or the third core network device.

23. The method according to any one of claims 19 to 22, wherein
the first indication information further indicates at least one of the following: a measurement mode of the first transmission delay, a measurement period of the first transmission delay, a measurement trigger condition of the first transmission delay, a sending period of the first transmission delay, or a sending trigger condition of the first transmission delay.

24. The method according to any one of claims 19 to 23, wherein
the first indication information further indicates an endpoint of a first tunnel and/or an establishment trigger condition of the first tunnel; and
the first tunnel is a tunnel between the first core network device and the application server, and the first tunnel is used to measure the first transmission delay.

25. A communication method, comprising:
determining, by an application server, a first data packet, wherein the first data packet comprises first time information, the first time information is used to determine a first transmission delay, and the first transmission delay is a transmission delay between a first core network device and the application server; and
sending, by the application server, the first data packet to the first core network device.

26. The method according to claim 25, wherein
the first time information comprises a moment at which the application server sends the first data packet.

27. The method according to claim 25, wherein before determining, by the application server, the first data packet, the method further comprises:
receiving, by the application server, a second data packet from the first core network device, wherein the second data packet comprises a moment at which the first core network device sends the second data packet, wherein
the first time information comprises the moment at which the first core network device sends the second data packet and a moment at which the application server receives the second data packet; or
the first time information comprises the moment at which the first core network device sends the second data packet, a moment at which the application server receives the second data packet, and a moment at which the application server sends the first data packet.

28. The method according to claim 25, wherein before determining, by the application server, the first data packet, the method further comprises:
receiving, by the application server, a third data packet from a terminal device through the first core network device, wherein the third data packet comprises a moment at which the terminal device sends the third data packet, wherein
the first time information comprises the moment at which the terminal device sends the third data packet and a moment at which the application server receives the third data packet.

29. A communication apparatus, wherein the communication apparatus comprises a processor, and the processor is configured to run a computer program or instructions, to enable the communication apparatus to perform the method according to any one of claims 1 to 12, or to enable the communication apparatus to perform the method according to any one of claims 13 to 18, or to enable the communication apparatus to perform the method according to any one of claims 19 to 24, or to enable the communication apparatus to perform the method according to any one of claims 25 to 28.

30. A computer-readable storage medium, wherein the computer-readable storage medium stores computer instructions or a program, and when the computer instructions or the program is run on a computer, the method according to any one of claims 1 to 12 is performed, or the method according to any one of claims 13 to 18 is performed, or the method according to any one of claims 19 to 24 is performed, or the method according to any one of claims 25 to 28 is performed.

31. A computer program product, wherein the computer program product comprises computer instructions; and when a part or all of the computer instructions are run on a computer, the method according to any one of claims 1 to 12 is performed, or the method according to any one of claims 13 to 18 is performed, or the method according to any one of claims 19 to 24 is performed, or the method according to any one of claims 25 to 28 is performed.
